# FASCICULE DE BREVET EUROPEEN

(11) **EP 4 051 543 B1**
(45) Date de publication et mention de la délivrance du brevet: **20.09.2023**
(21) Numéro de dépôt: 20807830.3
(22) Date de dépôt: 27.10.2020
(51) Int. Cl.: B60R 21/38

(54) **CHARNIÈRE ACTIVE POUR CAPOT DE VÉHICULE AUTOMOBILE**
AKTIVES SCHARNIER FÜR MOTORHAUBE EINES KRAFTFAHRZEUGS
ACTIVE HINGE FOR MOTOR VEHICLE BONNET

(30) Priorité: 28.10.2019 FR 1912055; 28.10.2019 FR 1912066
(43) Date de publication de la demande: 07.09.2022
(73) Titulaire: PSA Automobiles SA, 78300 Poissy (FR); Edscha Engineering GmbH, 42855 Remscheid (DE)
(72) Inventeur: KANTER, Patricia, 91300 MASSY (FR); SIMON, Herve, 78190 TRAPPES (FR); SCHMIT, Stéphane, 91190 GIF SUR YVETTE (FR)
(86) Numéro de dépôt international: PCT/FR2020/051938
(87) Numéro de publication internationale: WO 2021/084199

(56) Documents cités:
- EP-A1- 3 184 377
- JP-A- H1 134 925
- JP-A- H1 199 906
- JP-A- 2015 074 392

## Description

Le contexte technique de la présente invention est celui des équipements de sécurité de véhicules automobiles, et plus particulièrement les équipements conçus pour soulever les capots au niveau de leur partie arrière afin de protéger des piétons en cas d'accidents ou d'autres incidents dus à la circulation. Plus particulièrement, l'invention a trait à une charnière active pour capot de véhicule automobile.

De manière connue, certains véhicules automobiles comportent un capot « actif » qui est articulé sur une structure du véhicule automobile. Le capot est alors articulé grâce à des moyens de déplacement situés au niveau d'une extrémité arrière du capot, du côté du pare-brise du véhicule automobile. Ces moyens de déplacement vers le haut permettent d'activer le soulèvement de la partie arrière du capot lors d'un effort détecté au niveau d'un parechoc avant du véhicule automobile. L'effort détecté est plus particulièrement un choc piéton.

Dans l'état de la technique, on connait des dispositifs de sécurité pour capot actif de véhicules automobiles munis d'un moyen de déplacement comprenant une charnière de type pantographe. La charnière de type pantographe forme une articulation pour le soulèvement de la partie arrière du capot du véhicule automobile. Cette charnière est en configuration repliée lorsque le capot est verrouillé. Lorsqu'un choc sensiblement frontal est détecté par le dispositif de sécurité, la charnière se déploie grâce à un charnon mobile relié à un charnon fixe par une articulation.

L'inconvénient de ces dispositifs de sécurité munis d'une charnière de type pantographe est qu'ils sont lourds et volumineux et ainsi peu adaptés aux contraintes économiques actuelles du secteur automobile.

On connait par ailleurs des dispositifs de sécurité pour capots actifs de véhicules automobiles munis d'un charnon mobile, d'un charnon fixe et d'une béquille. Lorsqu'un choc sensiblement frontal est détecté par le dispositif de sécurité, le charnon mobile se déplace par rapport au charnon fixe, fixé solidairement à la structure dudit véhicule automobile, ce qui permet de soulever la partie arrière du capot. L'ouverture du charnon mobile produit un effet levier sur la béquille, qui est configurée pour soutenir le capot en position haute. La béquille est guidée dans son mouvement à la fois par une coopération entre l'une de ses extrémités et le charnon mobile, et également par une coopération entre une autre de ses extrémités et le charnon fixe.

Les documents JPH1199906 et JPH34925 décrivent différents types de charnières actives comportant un charnon fixe et un charnon mobile, le document JPH1199906 correspondant au préambule de la revendication 1. Le document EP3184377 décrit une charnière mobile comportant une béquille déformable.

La présente invention a pour objet de proposer une nouvelle charnière active pour capot de véhicule automobile offrant une alternative aux dispositifs de sécurité pour capots actifs connus, et de conduire en outre à d'autres avantages.

Un autre but de l'invention est de proposer une charnière active pour capot de véhicule automobile qui soit fiable dans son fonctionnement.

Un autre but de l'invention est de proposer une charnière active pour capot de véhicule automobile qui soit simple, tant du point de vue de sa mise en oeuvre, que du point de vue de sa fabrication.

Un autre but de l'invention est de proposer une charnière active pour capot de véhicule automobile qui soit peu onéreuse, de sorte à ne pas impacter négativement le coût du véhicule automobile qui se veut économique.

Un autre but de l'invention est de proposer une charnière active pour capot de véhicule automobile qui soit universelle et polyvalente.

Selon un premier aspect de l'invention, on atteint au moins l'un des objectifs précités avec une charnière active pour capot de véhicule automobile comportant les caractéristiques de la revendication 1. Cette charnière comporte un charnon fixe destiné à être fixé solidairement à une structure du véhicule automobile et par rapport à laquelle le capot est destiné à être soulevé, un charnon mobile destiné à être fixé solidairement au capot afin de pouvoir en contrôler son ouverture, et une béquille couplée en rotation avec ledit charnon mobile par un organe de couplage en rotation, la béquille comprenant en outre un organe de retenu, remarquable en ce que le charnon fixe comprend une zone de blocage destinée à collaborer avec l'organe de retenue de la béquille afin de maintenir ladite charnière active dans une configuration déployée ; et une zone de guidage destinée à collaborer avec l'organe de retenue afin de l'orienter vers la zone de blocage lors de l'ouverture de la charnière active.

La zone de guidage est délimitée par un bord inférieur et un bord supérieur libre situé à distance du bord inférieur, le bord inférieur et le bord supérieur formant ensemble un canal de guidage de l'organe de retenue vers la zone de blocage. Le bord inférieur de la zone de guidage et le bord supérieur du canal de guidage délimitent le canal de guidage. Le canal de guidage forme un passage configuré pour guider l'organe de retenue vers la zone de blocage lors de son déplacement en translation. En d'autres termes, le bord inférieur de la zone de guidage et le bord supérieur du canal de guidage sont configurés pour autoriser le déplacement de l'organe de retenue dans le canal de guidage. Par exemple, le bord inférieur de la zone de guidage et le bord supérieur du canal de guidage présentent une surface continue et/ou lisse le long de laquelle l'organe de retenue peut glisser.

Le bord supérieur du canal de guidage comprend une partie terminale libre rectiligne. Par rectiligne, on entend que la partie terminale libre du bord supérieur du canal de guidage s'étend en ligne sensiblement droite. Par sensiblement droite on entend que la partie terminale libre du bord supérieur du canal de guidage a une surface qui incite l'organe de guidage à conserver une même trajectoire lors de son déplacement en translation au niveau de ladite partie terminale libre du bord supérieur du canal de guidage. Dans le charnon fixe, la partie terminale libre du bord supérieur du canal de guidage est opposée à la zone de blocage du charnon fixe. En ce sens, la partie terminale libre du bord supérieur du canal de guidage participe à délimiter une entrée du canal de guidage. **C'est-à-dire que le canal de guidage est ouvert sur l'extérieur du charnon fixe au niveau d'une entrée du canal de guidage délimitée au moins par la paroi terminale libre.**

Le bord supérieur du canal de guidage comprend une partie proximale à la zone de blocage et formant un coude par rapport à la partie terminale libre dudit bord supérieur. Par « formant un coude », on entend que la partie proximale du bord supérieur du canal de guidage forme un angle saillant dans le bord supérieur. Lorsque l'organe de retenue de la béquille se déplace en translation le long de la partie proximale du bord supérieur du canal de guidage, il est amené à changer brusquement de direction. En changeant brusquement de direction, l'organe de retenue de la béquille est orienté vers la zone de blocage.

Le charnon mobile de la charnière active conforme au premier aspect de l'invention est mobile par rapport au charnon fixe qui est destiné à être fixe à la structure du véhicule automobile. Le charnon mobile est mobile lorsque la charnière s'ouvre ou se ferme.

Ainsi, le charnon fixe collabore avec une béquille de la charnière active, au niveau de l'organe de retenue de ladite béquille, lors de l'ouverture de la charnière active et à l'issue de l'ouverture de la charnière active.

La zone de blocage du charnon fixe et la zone de guidage du charnon fixe sont des zones du charnon fixe destinées à loger l'organe de retenue de la béquille.

La zone de blocage du charnon fixe est configurée pour bloquer la béquille. Notamment, la zone de blocage du charnon fixe est configurée pour bloquer la béquille en une position de soutien du capot et la charnière active en configuration déployée. La zone de blocage du charnon prend la forme d'un logement pour l'organe de retenue de la béquille.

La zone de blocage du charnon fixe est configurée pour bloquer l'organe de retenue de la béquille, en ce sens que l'organe de retenue ne peut en être délogé que par une force extérieure au charnon fixe et/ou à la béquille. En l'absence de cette force extérieure, l'organe de retenue de la béquille, une fois logé dans la zone de blocage, y est maintenu. En collaborant avec l'organe de retenue de la béquille, la zone de blocage du charnon fixe participe au maintien de la béquille en position de soutien du capot.

La zone de blocage du charnon fixe est configurée pour collaborer par engagement avec l'organe de retenue de la béquille. Par exemple, la zone de blocage a une forme au moins en partie complémentaire avec une forme de l'organe de retenue de la béquille.

La zone de guidage du charnon fixe conforme au premier aspect de l'invention est configurée pour guider l'organe de retenue de la béquille vers la zone de blocage du charnon fixe. En collaborant avec l'organe de retenue de la béquille, la zone de guidage du charnon fixe participe au positionnement de la béquille en une position de soutien du capot.

Le charnon fixe conforme au premier aspect de l'invention est configuré pour que l'organe de retenue passe successivement, et dans cet ordre, de la zone de guidage du charnon fixe à la zone de blocage du charnon fixe. La zone de guidage du charnon fixe et la zone de blocage du charnon fixe sont des zones adjacentes dans le charnon fixe. La zone de guidage du charnon fixe est configurée pour guider l'organe de retenue de la béquille dans un déplacement de translation. Ainsi, la zone de guidage du charnon fixe est configurée pour loger de façon transitoire l'organe de retenue de la béquille. En ce sens, la zone de guidage du charnon fixe est configurée pour autoriser une mobilité de l'organe de retenue de la béquille.

La zone de blocage du charnon fixe est configurée pour bloquer la béquille de sorte à l'immobiliser en translation suite à l'entrainement de la béquille par le charnon mobile de la charnière active. La zone de blocage du charnon fixe est configurée pour autoriser une mise en rotation de l'organe de retenue de la béquille. La zone de blocage du charnon fixe est configurée pour autoriser un déplacement de l'organe de retenue de la béquille suite à la force extérieure telle que précédemment décrite.

La zone de guidage du charnon fixe est configurée pour collaborer par engagement avec l'organe de retenue de la béquille. Par exemple, la zone de guidage du charnon fixe est configurée pour crocheter l'organe de retenue de la béquille.

L'invention conforme à son premier aspect permet ainsi avantageusement de guider la béquille de la charnière active vers sa position de soutien du capot, puis de maintenir la béquille de la charnière active dans cette position de soutien du capot.

Le charnon fixe de charnière active comprend avantageusement au moins un des perfectionnements ci-dessous, les caractéristiques techniques formant ces perfectionnements pouvant être prises seules ou en combinaison :
- le bord inférieur de la zone de guidage comprend une première partie rectiligne. Par rectiligne, on entend que la première partie du bord inférieur de la zone de guidage s'étend en une ligne sensiblement droite, incitant ainsi l'organe de guidage à suivre un mouvement de translation au niveau de ladite première partie du bord inférieur de la zone de guidage ;
- le bord inférieur de la zone de guidage comprend une deuxième partie située dans une configuration intermédiaire entre la première partie et la zone de blocage, la deuxième partie formant un coude par rapport à la première partie dudit bord inférieur. Par « formant un coude », on entend que la deuxième partie du bord inférieur de la zone de guidage forme un angle saillant dans le bord inférieur. Lorsque l'organe de retenue de la béquille se déplace en translation le long de la deuxième partie du bord inférieur de la zone de guidage, il est amené à changer brusquement de direction. En changeant brusquement de direction, l'organe de retenue de la béquille est orienté vers la zone de blocage ;
- le bord inférieur de la zone de guidage comprend (i) une première partie rectiligne, et (ii) une deuxième partie située dans une configuration intermédiaire entre la première partie et la zone de blocage, la deuxième partie formant un coude par rapport à la première partie dudit bord inférieur. Lorsque l'organe de retenue de la béquille se déplace en translation le long du bord inférieur de la zone de guidage, il emprunte une direction rectiligne le long de la première partie du bord inférieur de la zone de guidage, puis change de direction en suivant la direction donnée par la deuxième partie du bord inférieur de la zone de guidage, de sorte à entrer dans la zone de blocage du charnon fixe ;
- le bord supérieur du canal de guidage comprend (i) une partie terminale libre rectiligne, et (ii) une partie proximale à la zone de blocage et formant un coude par rapport à la partie terminale libre dudit bord supérieur. Lorsque l'organe de retenue de la béquille se déplace en translation le long du bord supérieur du canal de guidage, il emprunte une direction rectiligne le long de la partie terminale du bord supérieur du canal de guidage, puis change de direction en suivant la direction donnée par la partie proximale du bord supérieur du canal de guidage, de sorte à entrer dans la zone de blocage du charnon fixe ;
- le canal de guidage comprend une zone d'amorçage délimitée par la partie terminale libre du bord supérieur et par la première partie du bord inférieure, la partie terminale libre du bord supérieur et la première partie du bord inférieure formant ensemble un angle non nul. En d'autres termes, la partie terminale libre du bord supérieur et la première partie du bord inférieure ne sont pas parallèles entre elles. La zone d'amorçage du canal de guidage est configurée pour initier l'engagement de l'organe de retenue de la béquille dans le canal de guidage du charnon fixe. La zone d'amorçage du canal de guidage est configurée pour que l'organe de retenue soit alternativement au contact de la première partie du bord inférieur de la zone de guidage ou au contact de la partie terminale du bord supérieur de la zone de guidage, et puisse également être distant de la première partie du bord inférieur de la zone de guidage et de la partie terminale du bord supérieur de la zone de guidage ;
- une largeur de la zone d'amorçage du canal de guidage va en se rétrécissant du côté de la zone de blocage. La zone d'amorçage amorce l'engagement de l'organe de retenue de la béquille dans le canal de guidage du charnon fixe par un effet d'entonnoir. Une largeur de la zone d'amorçage du canal de guidage qui va en se rétrécissant du côté de la zone de blocage facilite l'entrée de l'organe de guidage dans le canal ;
- le canal de guidage comprend une zone de couplage délimitée par la partie du bord supérieur proximale à la zone de blocage et par la deuxième partie du bord inférieur, une largeur de la zone de couplage étant sensiblement constante en direction de la zone de blocage. La zone de couplage est configurée pour que l'organe de guidage de la béquille soit au contact de la deuxième partie du bord inférieur de la zone de guidage et/ou au contact de la partie du bord supérieur proximale à la zone de blocage du bord supérieur de la zone de guidage. Une largeur de la zone de couplage du canal de guidage est avantageusement plus petite qu'une largeur de la zone d'amorçage du canal de guidage ;
- la zone de blocage prend la forme d'une ouverture oblongue. La zone de blocage est ouverte sur la zone de couplage du canal de guidage ;
- l'ouverture oblongue formant la zone de blocage est délimitée par un côté inférieur qui est situé dans une direction opposée au bord supérieur de la zone de guidage par rapport à une extrémité de la deuxième partie du bord inférieur de la zone de guidage prise du côté de ladite ouverture oblongue ;
- le charnon fixe prend la forme d'une plaque. Le charnon fixe est alors une pièce globalement plane, qui s'étend dans un plan principal. Un tel charnon fixe est peu encombrant et a une fabrication simplifiée ;
- une épaisseur de la plaque est comprise entre 2 mm et 5 mm. La plaque formant le charnon fixe comprend deux parois, une première paroi opposée à une deuxième paroi, et l'épaisseur de la plaque formant le charnon fixe selon le premier aspect de l'invention est la distance la plus courte entre la première paroi et la deuxième paroi de la plaque. Préférentiellement, la plaque formant le charnon fixe a une épaisseur égale à 3 mm ;
- un matériau formant le charnon fixe comprend avantageusement de l'acier. Le charnon fixe formé par un tel matériau est résistant et permet au le charnon fixe d'assurer le blocage de l'organe de retenue de la béquille malgré les efforts imposés par ladite béquille ou son environnement. Le charnon fixe est avantageusement obtenue par emboutissage afin de limiter les étapes de reprises de pièces et de simplifier le processus de fabrication du charnon fixe selon l'invention ;

La charnière active conforme au premier aspect de l'invention est configurée pour adopter une configuration dite configuration pliée. Dans la configuration pliée, le charnon mobile de la charnière active est fermé, et l'organe de retenue de la béquille est découplé du charnon fixe de la charnière active. Dans le véhicule automobile équipé de la charnière active conforme au premier aspect de l'invention, la configuration pliée de la charnière active coïncide avec le capot en une position basse et avec la béquille en une position de repos. La configuration pliée est une position extrême de la charnière active.

La charnière active conforme au premier aspect de l'invention est configurée pour pouvoir se déployer. Le charnon mobile de la charnière active est configurée pour pouvoir s'ouvrir. Dans le véhicule automobile qu'elle équipe, la charnière active qui se déploie permet de positionner le capot en une position haute.

Lorsque la charnière active conforme au premier aspect de l'invention se déploie, elle entraine la béquille, qui passe de la position de repos à la position de soutien du capot. Plus particulièrement, lorsque le charnon mobile de la charnière active se déploie, il entraine la béquille par sa coopération avec l'axe de rotation solidaire du charnon mobile, et par la coopération entre l'ouverture de guidage de la béquille et l'ergot de guidage du charnon mobile de la charnière active. De façon simultanée et conformément à l'invention, l'organe de retenue de la béquille et le charnon fixe de la charnière active collaborent ensemble de sorte à guider la béquille entrainée par le charnon mobile.

La charnière active conforme au premier aspect de l'invention est configurée pour adopter une configuration dite configuration déployée. Dans la configuration déployée, le charnon mobile de la charnière active est ouvert. Dans le véhicule automobile équipé de la charnière active conforme au premier aspect de l'invention, la configuration déployée de la charnière active coïncide avec le capot en position haute et avec la béquille en position de soutien. La configuration déployée est une configuration extrême de la charnière active, opposée à la configuration pliée.

La béquille de la charnière active conforme au premier aspect de l'invention est destinée à soutenir le capot du véhicule automobile consécutivement au déploiement de la charnière active. L'organe de retenue de la béquille est configuré pour bloquer la béquille dans la position de soutien du capot avec le charnon fixe. Conformément à l'invention, la charnière active est maintenue en configuration déployée grâce à la béquille, bloquée par la coopération entre l'organe de retenue et la zone de blocage du charnon fixe. Dans le véhicule automobile qu'elle équipe, la charnière active est configurée pour passer de la configuration pliée à la configuration déployée suite à un choc piéton sensiblement frontal audit véhicule automobile.

Dans un mode de réalisation de l'invention, la béquille comprend une partie supérieure comprenant l'organe de couplage en rotation avec le charnon mobile, une partie inférieure comprenant l'organe de retenue avec le charnon fixe, une partie intermédiaire située entre la partie supérieure et la partie inférieure ; la partie intermédiaire est configurée pour, d'une part, être rigide et indéformable au regard d'un effort nominal correspondant au moins à une masse du capot avec lequel la béquille est destinée à collaborer et, d'autre part, pour être déformable au regard d'un effort - dit d'accident - prédéfini et supérieur à l'effort nominal.

Ainsi, la béquille est destinée à collaborer avec la charnière active et avec le capot du véhicule automobile associé à la charnière active. Selon l'invention, dans le véhicule automobile qu'elle équipe, la béquille permet (i) d'arrêter la levée du capot lorsqu'une hauteur suffisante est atteinte, et (ii) de soutenir le capot du véhicule automobile lorsque la charnière active avec laquelle la béquille est destinée à collaborer est déployée. La béquille permet également de relâcher le capot du véhicule automobile lorsque l'effort exercé sur la béquille dépasse une valeur seuil, typiquement lorsqu'un choc apparait sur le capot maintenu par la béquille.

En d'autres termes, la béquille est destinée à soutenir le capot du véhicule automobile qu'elle équipe jusqu'à ce que l'effort d'accident soit appliqué audit capot, tel que par exemple lorsque le piéton percute le véhicule automobile au niveau du capot du véhicule automobile. Alors, conformément à l'invention, sous l'effort d'accident, la béquille se déforme élastiquement ou plastiquement pour pouvoir faire redescendre le capot du véhicule automobile qu'elle équipe, de sorte à amortir ledit effort d'accident.

L'organe de retenue comprend par exemple un axe qui s'étend perpendiculairement à la béquille. Lorsque la béquille est formée par une plaque, le plan d'élongation de la béquille est perpendiculaire ou sensiblement perpendiculaire à la plaque. L'organe de retenue est en saillie de la plaque, ce qui le configure pour pouvoir coopérer avec le charnon fixe de la charnière active ;

La partie supérieure de la béquille comprend une ouverture circulaire destinée à collaborer avec un axe de rotation solidaire du charnon mobile de la charnière active. L'organe de couplage en rotation de la partie supérieure de la béquille comprend l'ouverture circulaire de la partie supérieure de la béquille. Avantageusement, l'ouverture circulaire de la partie supérieure de la béquille est configurée pour coopérer par engagement d'une forme complémentaire du charnon mobile de la charnière active. L'ouverture circulaire participe à la mise en oeuvre de la béquille selon le premier aspect de l'invention. Lors du déploiement de la charnière active à laquelle la béquille est associée, l'ouverture circulaire de la partie supérieure de la béquille participe à faire passer la béquille de la position de repos à la position de soutient du capot du véhicule automobile.

La charnière active conforme au premier aspect de l'invention comprend aussi avantageusement au moins un des perfectionnements ci-dessous, les caractéristiques techniques formant ces perfectionnements pouvant être prises seules ou en combinaison :
- la partie supérieure comprend une ouverture de guidage destinée à collaborer avec un ergot de guidage du charnon mobile de la charnière active. L'ouverture de guidage de la partie supérieure de la béquille permet de guider la béquille lorsqu'elle passe de la position de repos à la position de soutien du capot. L'ouverture de guidage de la partie supérieure de la béquille est située dans une position intermédiaire entre l'ouverture circulaire et la partie intermédiaire de la béquille. L'ouverture de guidage de la partie supérieure de la béquille a des dimensions supérieures à l'ergot de guidage du charnon mobile de la charnière active avec lequel elle est destinée à collaborer ;
- l'ouverture de guidage a une forme oblongue et asymétrique. La forme oblongue de l'ouverture de guidage de la partie supérieure de la béquille est configurée pour autoriser le déploiement de la charnière active et configurée pour guider le charnon mobile de la charnière active dans son déploiement. La forme asymétrique de l'ouverture de guidage de la partie supérieure de la béquille est configurée pour loger l'ergot de guidage du charnon mobile de la charnière active en différentes zones de ladite ouverture de guidage ;
- l'ouverture de guidage est délimitée par deux bords longitudinaux qui s'étendent en direction de l'organe de couplage en rotation, un angle non nul séparant les deux bords longitudinaux. En d'autres termes, les deux bords longitudinaux ne sont pas parallèles entre eux. Les deux bords longitudinaux sont destinés à coopérer avec l'ergot de guidage du charnon mobile de la charnière active. Les bords longitudinaux de l'ouverture de guidage de la partie supérieure de la béquille guident ladite béquille lorsqu'elle passe de la position de repos à la position de soutien du capot ;
- l'ouverture de guidage comprend, au niveau d'un bord inférieur situé du côté de la zone intermédiaire de la béquille, une zone de blocage de l'ergot de guidage du charnon mobile de la charnière active. La zone de blocage de l'ouverture de guidage de la partie supérieure de la béquille conforme au premier aspect de l'invention est configurée pour bloquer la béquille en position de soutien du capot du véhicule automobile équipé de ladite béquille. Au niveau de sa zone de blocage, l'ouverture de guidage de la partie supérieure de la béquille est destinée à bloquer le déploiement du charnon mobile de la charnière active, via son ergot de guidage ;
- la zone de blocage de l'ouverture de guidage prend la forme d'un arc de cercle formé au niveau d'une extrémité inférieure de l'un des bords longitudinaux. L'arc de cercle a un diamètre égal ou sensiblement égal à celui de l'ergot de guidage du charnon mobile de la charnière active avec laquelle la béquille est destinée à collaborer. L'arc de cercle a un rayon de courbure orienté vers la partie supérieure de la béquille ;
- la partie supérieure de la béquille forme un angle non nul avec la partie intermédiaire de ladite béquille. En particulier, l'angle formé entre la partie supérieure et la partie intermédiaire de la béquille est compris entre 10° et 45°. L'angle formé entre la partie supérieure et la partie intermédiaire de la béquille est avantageusement égal à 30°. L'angle formé entre la partie supérieure et la partie intermédiaire de la béquille est mesuré sur la béquille n'ayant pas subi de déformation et/ou n'ayant pas subi d'effort d'accident. Autrement dit, l'angle formé entre la partie supérieure et la partie intermédiaire de la béquille est mesuré sur une béquille ayant une partie intermédiaire intègre. Par exemple, l'angle formé entre la partie supérieure et la partie intermédiaire de la béquille est mesuré en position de repos ou en position de soutien ;
- l'organe de retenue de la partie inférieure de la béquille s'étend sensiblement perpendiculairement à un plan d'élongation de la béquille. Lorsque la béquille est formée par une plaque, le plan d'élongation de la béquille est perpendiculaire ou sensiblement perpendiculaire à la plaque. L'organe de retenue est en saillie de la plaque, ce qui le configure pour pouvoir coopérer avec le charnon fixe de la charnière active ;
- selon un premier exemple de réalisation, l'organe de retenue est issu de matière avec la béquille. On entend par « issus de matière » le fait que, dans le béquille conforme au premier aspect de l'invention, l'organe de retenue ne peut être séparé de la béquille sans qu'il ne soit porté atteinte à tout ou partie de leur intégrité. Ainsi, selon l'invention, l'organe de retenue et la béquille forment un ensemble qualifié de monobloc du fait qu'ils ne forment ensemble qu'une seule et même pièce continue, faite d'un seul tenant et obtenue au cours d'un même procédé de fabrication. Une telle béquille est par ailleurs plus rigide et plus légère. Selon un deuxième exemple de réalisation alternatif au premier exemple de réalisation, l'organe de retenue est rapporté sur la béquille et fixé solidairement à ladite béquille par des moyens de fixations détachables ou permanents. Un exemple de moyen de fixation détachable est par vissage. Un exemple de moyen de fixation permanent est un moyen de fixation non détachable, tel que par exemple par brasage ;
- l'organe de retenue comprend un axe qui s'étend perpendiculairement à la béquille. L'axe formant l'organe de retenue prend par exemple la forme d'un rivet solidarisé au niveau de l'une de ses extrémités à la béquille ;
- la partie intermédiaire de la béquille comprend au moins une zone d'amincissement local de matière. La zone d'amincissement local permet de concentrer les contraintes mécaniques qui apparaissent dans la béquille, notamment, les contraintes dues à l'effort d'accident. Autrement dit, la zone d'amincissement local permet de concentrer les contraintes mécaniques qui apparaissent lorsque le choc que l'on souhaite amortir intervient ;
- la partie intermédiaire de la béquille comprend deux zones d'amincissement local directement adjacentes et qui sont séparées par une zone de plus grande largeur de la partie intermédiaire de la béquille. La zone de plus grande largeur de la partie intermédiaire de la béquille est, dans la partie intermédiaire, plus large que les zones d'amincissement local. Une zone d'amincissement local présente une largeur inférieure ou sensiblement égale à une épaisseur de la béquille. A contrario, la zone de plus grande largeur de la partie intermédiaire de la béquille séparant deux zones d'amincissement local adjacentes présente une largeur au moins trois fois supérieure à la largeur de la zone d'amincissement local. La zone de plus grande largeur de la partie intermédiaire de la béquille permet de renforcer la partie intermédiaire de sorte à ce que la béquille assure sa fonction de soutien dans la position de soutien du capot du véhicule automobile qu'elle équipe. Plus particulièrement, la partie intermédiaire de la béquille comprend trois zones d'amincissement local et deux zones de plus grande largeur de la partie intermédiaire de la béquille. Les zones d'amincissement local de la partie intermédiaire de la béquille sont alors séparées deux à deux par l'une des deux zones de plus grande largeur de la partie intermédiaire de la béquille ;
- chaque zone d'amincissement local de la partie intermédiaire de la béquille est délimitée de part et d'autre par un profil circulaire ou elliptique ;
- la béquille comprend, au niveau de sa partie inférieure, une dérive qui s'étend simultanément perpendiculairement à la partie inférieure de la béquille et à l'organe de retenue de ladite béquille. La dérive de la partie inférieure de la béquille est destinée à corriger le positionnement relatif de la béquille par rapport au charnon fixe de la charnière active. La dérive prend la forme d'une portée prismatique formée au niveau de la partie inférieure de la béquille. Avantageusement, l'organe de retenue est situé entre la dérive et une extrémité terminale inférieure de la béquille ;
- la dérive forme un angle sensiblement perpendiculaire avec la partie intermédiaire de la béquille. Avantageusement, par rapport à la partie intermédiaire de la béquille, la dérive s'étend à l'opposé de l'organe de couplage en rotation de la partie supérieure de la béquille ;
- la béquille prend la forme d'une plaque. La béquille est alors une pièce globalement plane, qui s'étend dans un plan principal. Une telle béquille est peu encombrante et a une fabrication simplifiée ;
- une épaisseur de la plaque est comprise entre 2 mm et 5 mm. La plaque comprend deux faces, une première face opposée à une deuxième face, et l'épaisseur de la plaque formant la béquille selon le premier aspect de l'invention est la distance la plus courte entre la première face et la deuxième face de la plaque. Préférentiellement, la plaque formant la béquille a une épaisseur égale à 3 mm ;
- un matériau formant la béquille comprend avantageusement de l'acier. La béquille formée par un tel matériau est résistante et permet à la béquille de se maintenir en position de soutien du capot dans le véhicule automobile qu'elle équipe. La béquille est avantageusement obtenue par fonderie. Le procédé de formage de la béquille par emboutissage afin de simplifier le processus de fabrication de la béquille selon l'invention.
- l'organe de retenue de la partie inférieure de la béquille est découplé du charnon fixe lorsque la charnière active est fermée et ledit organe de retenue collabore avec le charnon fixe lorsque la charnière active est ouverte.
- la charnière comprenant un actionneur configuré pour piloter une ouverture et/ou une fermeture de la charnière active.

La charnière active est configurée pour contrôler l'ouverture de la partie arrière du capot du véhicule automobile qu'elle équipe.

La charnière active est configurée pour adopter une position dite position pliée. Dans la position pliée, la charnière active est fermée. Dans le véhicule automobile équipé de la charnière active conforme au premier aspect de l'invention, la position pliée de la charnière active coïncide avec le capot en position basse et avec la béquille en position de repos. La position pliée est une position extrême de la charnière active.

La charnière active est configurée pour pouvoir se déployer. Dans le véhicule automobile qu'elle équipe, la charnière active qui se déploie permet de positionner le capot en position haute. Lorsque la charnière active se déploie, elle entraine la béquille. Plus particulièrement, lorsque le charnon mobile de la charnière active se déploie, il entraine la béquille grâce à la coopération entre l'organe de couplage en rotation de ladite béquille et l'axe de rotation solidaire du charnon mobile. De façon simultanée, lorsque le charnon mobile de la charnière active se déploie, il guide, via son ergot de guidage, la béquille, par la coopération entre l'ouverture de guidage de la partie supérieure de la béquille et l'ergot de guidage du charnon mobile de la charnière active. L'ergot de guidage du charnon mobile de la charnière active est guidé par sa coopération avec les deux bords longitudinaux de l'ouverture de guidage de la partie supérieure de la béquille, le long desquels ledit ergot de guidage glisse lors du déploiement de ladite charnière active.

Dans le véhicule automobile équipé de la charnière active conforme au premier aspect de l'invention, la position déployée de la charnière active coïncide avec le capot en position haute et avec la béquille en position de soutien. La position déployée est une position extrême de la charnière active, opposée à la position pliée. La charnière active est maintenue en position déployée grâce à la coopération entre le charnon fixe de la charnière active conforme au premier aspect de l'invention et l'organe de retenue de la béquille. Dans le véhicule automobile qu'elle équipe, la charnière active est configurée pour passer de la position pliée à la position déployée suite à un choc piéton sensiblement frontal audit véhicule automobile.

La charnière active est configurée pour pouvoir se replier. Dans le véhicule automobile qu'elle équipe, la charnière active qui se replie permet de positionner le capot en position affaissée.

La charnière active est configurée pour adopter au moins une position intermédiaire. L'au moins une position intermédiaire est localisée entre la position pliée et la position déployée. Dans le véhicule automobile équipé de la charnière active conforme au premier aspect de l'invention, l'au moins une position intermédiaire de la charnière active coïncide avec le capot en position affaissée et avec la béquille en position de relaxe. L'au moins une position intermédiaire dépend de la valeur de l'effort d'accident. Dans le véhicule automobile qu'elle équipe, la charnière active est configurée pour passer de la position déployée à au moins une position intermédiaire.

La charnière active de capot de véhicule automobile conforme au premier aspect de l'invention comprend avantageusement au moins un des perfectionnements ci-dessous, les caractéristiques techniques formant ces perfectionnements pouvant être prises seules ou en combinaison :
- le charnon mobile comprend un élément de liaison terminal et un élément de liaison intermédiaire, une des extrémités de l'élément de liaison intermédiaire étant fixée au niveau de l'axe de rotation du charnon mobile l'élément de liaison terminal du charnon mobile, et une autre des extrémités de l'élément de liaison intermédiaire étant fixée au charnon fixe ;
- l'élément intermédiaire du charnon mobile comprend l'ergot de guidage du charnon mobile ;
- la charnière comprend une fixation fusible. La charnière active est maintenue en position pliée grâce à la fixation fusible. Par exemple, la fixation fusible est un rivet de blocage du charnon mobile qui est solidairement fixé au charnon mobile. La charnière active est bloquée en position pliée et la béquille est en position de repos lorsque le rivet de blocage est solidairement fixé au charnon mobile de la charnière active. Lorsque le rivet de blocage est désolidarisé du charnon mobile, alors le charnon mobile se déploie et entraine la béquille en position de soutien du capot ;
- l'actionneur comprend une cartouche pyrotechnique configuré pour faire libérer le charnon mobile. La cartouche pyrotechnique rend ainsi possible le déploiement du charnon mobile. De façon particulière, la cartouche pyrotechnique peut ainsi rompre la fixation fusible lorsque la fixation fusible et le charnon mobile sont associés.

Selon un deuxième aspect de l'invention, il est proposé un véhicule automobile comprenant une structure et un capot monté mobile en rotation par rapport à la structure par l'intermédiaire d'une charnière active conforme au premier aspect de l'invention. Suite à un choc piéton sensiblement frontal, le piéton est généralement projeté, avant de retomber sur le véhicule automobile qu'il a percuté et de subir un nouveau choc correspondant à l'effort d'accident. C'est un choc ayant lieu au niveau du capot du véhicule automobile. Le véhicule automobile conforme au deuxième aspect de l'invention est configuré pour limiter la gravité du choc sensiblement frontal entre le piéton et ledit véhicule automobile.

Le capot comprend une partie avant située du côté du parechoc de véhicule et une partie arrière du côté d'un pare-brise du véhicule automobile. Dans le véhicule automobile conforme au deuxième aspect de l'invention, le capot est monté mobile en rotation de sorte à pouvoir s'ouvrir au niveau de sa partie arrière.

La charnière active contrôle l'ouverture de la partie arrière du capot du véhicule automobile conforme au deuxième aspect de l'invention.

Le déploiement de la charnière active vise à positionner le capot du véhicule automobile en position haute. Ainsi, la charnière active éloigne ledit capot des éléments rigides situés sous le capot au niveau d'un compartiment moteur du véhicule automobile. Le capot du véhicule automobile, lorsqu'il absorbe l'effort d'accident, se déforme en direction des éléments rigides. Eloigner le capot des éléments rigides situés sous le capot permet ainsi de limiter la gravité du choc au niveau du capot du véhicule automobile.

Suite à l'effort d'accident, la béquille se déforme au niveau de sa partie intermédiaire. Le capot s'affaisse, accompagnant ainsi le choc du piéton au niveau du capot. Cet accompagnement permet d'amortir ledit choc.

Il est également décrit un procédé d'ouverture d'une charnière active pour capot de véhicule automobile consécutivement à un choc en front de véhicule automobile, le procédé mettant en oeuvre une charnière active conforme au premier aspect de l'invention, le procédé comprenant successivement (i) une étape initiale dans laquelle le charnon fixe est découplé par rapport à la béquille, (ii) une étape de guidage de l'organe de retenue de la béquille dans une zone de guidage du charnon fixe, et (ii) une étape de blocage de l'organe de retenue de la béquille dans une zone de blocage du charnon fixe.

Dans l'étape initiale, le charnon fixe et l'organe de retenue de la béquille sont dissociés. La béquille est en position de repos. Le charnon mobile est fermé, et la charnière active pliée sur elle-même.

Dans l'étape de guidage, l'organe de retenue de la béquille coopère avec le charnon fixe. L'organe de retenue est engagé dans le canal de guidage du charnon fixe, et se déplace en translation dans le canal de guidage du charnon fixe jusqu'à atteindre la zone de blocage.

Dans l'étape de blocage, l'organe de retenue est bloqué dans la zone de blocage du charnon fixe et au contact du côté inférieur de la zone de blocage. La béquille est en position de soutient du capot. Le charnon mobile est ouvert, et la charnière active déployée.

Le procédé d'ouverture comprend avantageusement au moins un des perfectionnements ci-dessous, les caractéristiques techniques formant ces perfectionnements pouvant être prises seules ou en combinaison :
- l'étape de guidage comprenant une étape sous-étape d'amorçage, la sous-étape d'amorçage a lieu au niveau de la zone d'amorçage du canal de guidage. L'organe de retenue de la béquille est entrainé par le charnon mobile vers la zone d'amorçage du canal de guidage. L'organe de retenue de la béquille se déplace en translation dans la zone d'amorçage du canal de guidage en étant guidé par la première partie du bord inférieur du charnon fixe et/ou par la partie terminale libre du bord supérieur du charnon fixe ;
- l'étape de guidage comprenant une sous-étape de couplage suivant la sous-étape d'amorçage, la sous-étape de couplage a lieu au niveau de la zone de couplage du canal de guidage et dans la zone de blocage. L'organe de retenue de la béquille, qui s'est déplacé en translation dans la zone d'amorçage du canal de guidage, est entrainé par le charnon mobile vers de la zone de couplage du canal de guidage. Dans la zone d'amorçage du canal de guidage, l'organe de retenue de la béquille change de trajectoire de part le coude de la deuxième partie du bord inférieur et/ou de part le coude de la partie proximale du bord supérieur. En changeant de trajectoire, l'organe de retenue de la béquille intègre la zone de blocage. L'étape de guidage se termine lorsque l'organe de retenue de la béquille vient en butée du côté inférieur de la zone de couplage.

Il est proposé un procédé d'amortissement d'un effort d'accident consécutif à un choc en front de véhicule automobile, le procédé mettant en oeuvre une charnière active conforme au premier aspect de l'invention comprenant une béquille, le procédé comprenant une étape d'ouverture de la charnière active comprenant (i) une étape d'engagement lors de laquelle l'organe de retenue de la partie inférieure de la béquille s'engage avec charnon fixe, (ii) une étape de rotation du charnon mobile par rapport à l'axe de rotation de la charnière active, (iii) une étape de guidage lors de laquelle l'ergot de guidage du charnon mobile guide l'ouverture de guidage de la béquille. Lors de l'étape d'ouverture de la charnière active, la charnière active s'ouvre et a un effet levier sur la béquille.

Avant l'étape d'ouverture de la charnière active, le charnon fixe et l'organe de retenue de la partie inférieure de la béquille sont dissociés l'un l'autre.

Lors de l'étape d'engagement de l'étape d'ouverture de la charnière active, la charnière active se déploie et s'engage avec la béquille, via l'organe de retenue de la béquille. Une fois l'étape d'engagement initiée, l'organe de retenue retient la béquille avec le charnon fixe de la charnière active, et ce tant que la charnière active s'ouvre.

L'organe de retenue est configuré pour que, à l'issue de l'étape d'ouverture, ledit organe de retenue empêche la béquille de se désengager d'avec le charnon fixe de la charnière active.

Lors de l'étape d'engagement, l'organe de retenue de la partie inférieure de la béquille s'engage par exemple avec le crochet du charnon fixe.

Le charnon mobile de la charnière active s'ouvre lors de l'étape d'ouverture par un mouvement de rotation ayant lieu pendant l'étape de rotation. Avantageusement, l'étape de rotation est concomitante avec toute l'étape d'ouverture.

L'étape de guidage est comprise pendant l'étape de rotation. L'étape de guidage et l'étape de rotation se terminent avec l'étape d'ouverture de la charnière active.

Pendant l'étape de guidage, l'ergot de guidage du charnon mobile de la charnière active entre au contact de au moins l'un des bords de l'ouverture de guidage de la béquille. Par exemple, l'ergot de guidage du charnon mobile entre au contact d'au moins l'un des bords longitudinaux de l'ouverture de guidage de la béquille.

L'étape de guidage s'achève lorsque l'ergot de guidage du charnon mobile de la charnière active arrive dans la zone de blocage de l'ouverture de guidage de la béquille, en butée de la bordure inférieure de l'ouverture de guidage de la béquille.

Le procédé comprend avantageusement au moins un des perfectionnements ci-dessous, les caractéristiques techniques formant ces perfectionnements pouvant être prises seules ou en combinaison :
- l'étape d'ouverture est précédée d'une étape d'actionnement. Lors de l'étape d'actionnement, l'actionneur enclenche l'ouverture de la charnière active. Par exemple, lors de l'étape d'actionnement, l'actionneur rompt le rivet de blocage solidairement fixé au charnon mobile de la charnière active ;
- le procédé comprend une étape de maintien en position ouverte de la charnière active, l'étape de maintien en position ouverte de la charnière active étant consécutive à l'étape d'ouverture. Lors de l'étape de maintien en position ouverte de la charnière active, la béquille est en position de soutien du capot ;
- l'étape d'actionnement est suivie d'une étape de survenue d'un effort d'accident. L'étape de survenue d'un effort d'accident succède à l'étape de maintien en position ouverte de la charnière active.
- l'étape de survenue d'un effort d'accident est suivie d'une étape de fermeture de la charnière active. Lors de l'étape de fermeture de la charnière active, la béquille est en position de relaxe, puisqu'elle se déforme sous l'effet de l'effort d'accident.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue schématique de profil un véhicule automobile conforme au deuxième aspect de l'invention comprenant une charnière active conforme au premier aspect de l'invention ;
[Fig.2] illustre une vue schématique partielle et de profil du véhicule automobile illustré en FIGURE 1 et une charnière active, le véhicule automobile ayant un capot dans une position haute, et la charnière active dans une configuration déployée ;
[Fig.3] illustre le charnon fixe ;
[Fig.4] illustre une première étape d'une cinétique représentative d'un procédé d'ouverture d'une charnière active pour capot de véhicule automobile, le procédé mettant en oeuvre la charnière active suite à un choc piéton sensiblement frontal au véhicule automobile
[Fig.5] illustre une deuxième étape de la cinétique du procédé d'ouverture de la charnière active pour capot de véhicule automobile ; et
[Fig.6] illustre une troisième étape de la cinétique du procédé d'ouverture de la charnière active pour capot de véhicule automobile ;
[Fig.7] illustre une vue schématique de profil d'un véhicule automobile conforme au deuxième aspect de l'invention comprenant une béquille conforme au premier aspect de l'invention ;
[Fig.8] illustre la béquille conforme au premier aspect de l'invention ;
[Fig.9] illustre une première étape d'une cinétique représentative d'un procédé d'amortissement d'un effort d'accident, le procédé mettant en oeuvre la béquille conforme au premier aspect de l'invention lors d'un choc piéton sensiblement frontal au véhicule automobile ;
[Fig.10] illustre une deuxième étape de la cinétique représentative du procédé d'amortissement d'un effort d'accident ;
[Fig.11] illustre une troisième étape de la cinétique représentative du procédé d'amortissement d'un effort d'accident ;
[Fig.12] illustre une quatrième étape de la cinétique représentative du procédé d'amortissement d'un effort d'accident ;
[Fig.13] illustre une cinquième étape de la cinétique représentative du procédé d'amortissement d'un effort d'accident ;
[Fig.14] illustre une sixième étape de la cinétique représentative du procédé d'amortissement d'un effort d'accident.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant, en plus des caractéristiques de la revendication1, qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

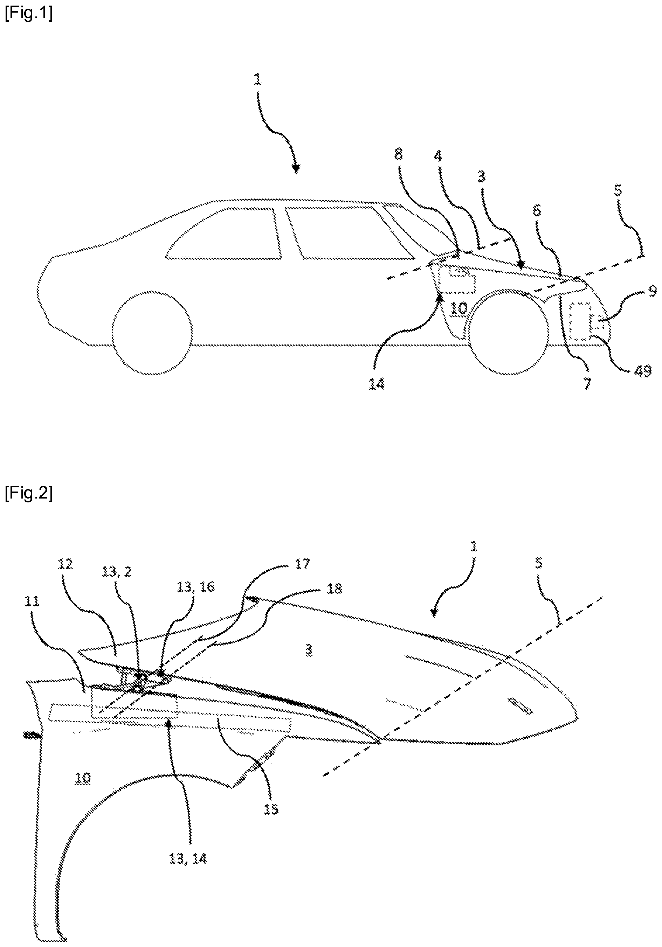

Selon FIGURE 1, un véhicule automobile 1 équipé d'une charnière active suivant l'invention comportant un charnon fixe 14. Dans la figure 1, seule le charnon fixe 14 de la charnière 13 est représenté. Le véhicule 1 automobile 1 comprend à l'avant un capot 3. Le capot 3 du véhicule automobile 1 est représenté fermé dans la FIGURE 1, dans une position dite basse.

Le capot 3 du véhicule automobile 1 comprend deux axes de mise en rotation 4, 5.

Le capot 3 du véhicule automobile 1 est configuré pour pouvoir s'ouvrir selon un premier axe de mise en rotation 4 situé dans une partie arrière 8 du capot 3 du véhicule automobile 1. En ouvrant le capot 3 du véhicule automobile 1 selon le premier axe de mise en rotation 4, il est possible d'accéder au compartiment moteur 7 du véhicule automobile 1. Le compartiment moteur 7 du véhicule automobile 1 est recouvert par le capot 3 du véhicule automobile 1 lorsque ledit capot 3 est fermé.

Le capot 3 du véhicule automobile 1 est configuré pour pouvoir s'ouvrir selon un deuxième axe de mise en rotation 5 situé dans une partie avant 6 du capot 3 du véhicule automobile 1, opposée à la partie arrière 8 du capot 3 du véhicule automobile 1. Lorsque le capot 3 du véhicule automobile 1 s'ouvre selon le deuxième axe de mise en rotation 5, il atteint une position dite haute illustrée en FIGURE 2.

Le véhicule automobile 1 comprend un organe de détection 9 de choc sensiblement frontal. Lorsque l'organe de détection 9 de choc sensiblement frontal du véhicule automobile 1 détecte un choc sensiblement frontal supérieur à un effort frontal prédéterminé, un actionneur, couplé avec l'organe de détection 9, pilote une ouverture du capot 3 du véhicule automobile 1 selon le deuxième axe de mise en rotation 5 conformément à la mise en oeuvre de l'invention.

La FIGURE 1 montre que le charnon fixe 14 est situé sous le capot 3 du véhicule automobile 1. Le charnon fixe 14 est représenté en pointillés, par transparence dans le véhicule automobile 1. L'organe de détection 9 de choc sensiblement frontal du véhicule automobile 1 est schématisé en traits pointillés.

Le charnon fixe 14 est recouvert par une aile avant 10 du véhicule automobile 1. Ainsi, le charnon fixe 14 est masqué par l'aile avant 10 et le capot 3 lorsque le capot 3 du véhicule automobile 1 est en position basse.

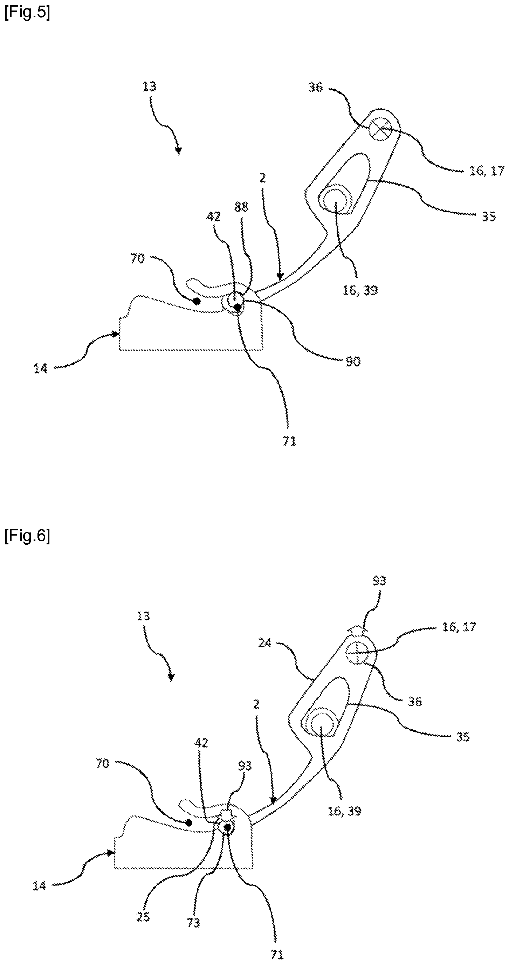

La FIGURE 2 montre le capot 3 du véhicule automobile 1 en position haute. Le capot 3 du véhicule automobile 1 est en position haute par rapport à une structure 15 du véhicule automobile 1. La FIGURE 2 illustre la charnière active 13. La charnière active 13 comprend le charnon fixe 14, un charnon mobile 16 et une béquille 2. Lorsque le capot 3 du véhicule automobile 1 en position haute, le charnon fixe 14 selon l'invention coopère avec la béquille 2 de la charnière active 13 dans une configuration telle qu'illustrée en FIGURE 6.

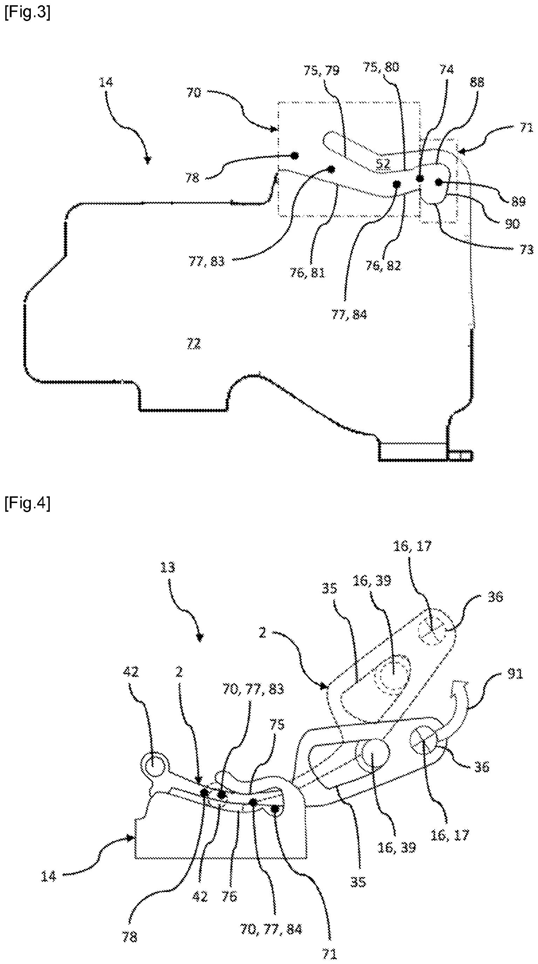

Le charnon fixe 14 se situe le long de l'aile avant 10 du véhicule automobile 1, au niveau d'une partie supérieure 11 de l'aile avant 10. Plus particulièrement, le charnon fixe 14 se situe le long d'une portion latérale 12 du capot 3 du véhicule automobile 1. Le charnon fixe 14 peut se situer du côté droit et/ou du côté gauche du véhicule automobile 1. Le charnon fixe 14 est schématisé en FIGURE 2, et décrit plus en détail en FIGURE 3.

Le charnon fixe 14 de la charnière active 13 est destiné à être fixé solidairement à la structure 15 du véhicule automobile 1 par un dispositif de fixation. Le dispositif de fixation n'est pas représenté sur la FIGURE 2.

La béquille 2 de la charnière active 13 est située le long de la portion latérale 12 du capot 3 du véhicule automobile 1, au-dessus du charnon fixe 14 selon l'invention. La béquille 2 de la charnière active 13 est dans une position de soutien du capot 3 du véhicule automobile 1 de sorte à maintenir le capot 3 du véhicule automobile 1 en position haute. Dans la position de soutien du capot 3 du véhicule automobile 1, la béquille 2 de la charnière active 13 est sensiblement à la verticale dans le véhicule automobile 1.

Le capot 3 du véhicule automobile 1 est fixé solidairement au charnon mobile 16 de la charnière active 13. C'est le charnon mobile 16 de la charnière active 13 de capot 3 de véhicule automobile 1 qui contrôle l'ouverture du capot 3 du véhicule automobile 1 selon le deuxième axe de mise en rotation 5, et l'ouverture du capot 3 par l'actionneur 49 décrite en FIGURE 1 est faite via le charnon mobile 16.

La charnon mobile 16 de la charnière active 13 est fixé solidairement au capot 3 du véhicule automobile 1 par un organe de fixation afin de pouvoir en contrôler son ouverture. L'organe de fixation n'est pas représenté sur la FIGURE 2. Le charnon mobile 16 de la charnière active 13 est mobile par rapport au charnon fixe 14. Le charnon mobile 16 de la charnière active 13 comprend un axe de rotation 17. Il comprend également une ligne de rotation 18. Lorsque le charnon mobile 16 de la charnière active 13 est mis en rotation selon la ligne de rotation 18, il s'ouvre ou se ferme. Lorsqu'il s'ouvre, le charnon mobile 16 de la charnière active 13 est configuré pour mettre en rotation selon l'axe de rotation 17 du charnon mobile 16 la béquille 2 de la charnière active 13 pour amener en position haute le capot 3 du véhicule automobile 1. Le charnon mobile 16 de la charnière active 13 est mis en rotation selon son axe de rotation 17 du charnon mobile 16 de la charnière active 13, il entraine en rotation la béquille 2 de la charnière active 13 en position de soutien du capot 3 du véhicule automobile 1. C'est la béquille 2 de la charnière active 13 qui, lorsqu'elle est en position de soutien du capot 3 du véhicule automobile 1, maintien le charnon mobile 16 de la charnière active 13 ouvert.

La FIGURE 3 montre de façon isolée le charnon fixe 14. Le charnon fixe 14 comprend une zone de guidage 70 et une zone de blocage 71, toutes deux destinées à loger un organe de retenue 42 de la béquille 2 de la charnière active 13 comme illustré dans les FIGURES 4 à 6, pour respectivement et successivement le guider et le bloquer. Le charnon fixe 14 comprend en outre un corps 72 et un crochet 52 en saillie dudit corps 72. Le crochet 52 du charnon fixe 14 s'étend le long du corps 72 du charnon fixe 14 de sorte à ce que la zone de guidage 70 du charnon fixe 14 et la zone de blocage 71 du charnon fixe 14 séparent le crochet 52 du charnon fixe 14 et le corps 72 du charnon fixe 14.

La zone de blocage 71 du charnon fixe 14 est formée d'une ouverture oblongue 89 délimitée par comprend un côté inférieur 73 opposé à un côté supérieur 88. Dans l'exemple de la FIGURE 3, la zone de blocage 71 du charnon fixe 14 formée de l'ouverture oblongue 89 étend sa plus grande dimension entre le côté inférieur 73 de la zone de blocage 71 du charnon fixe 14 et le côté supérieur 88 de la zone de blocage 71 du charnon fixe 14. La zone de blocage 71 du charnon fixe 14 est ouverte sur la zone de guidage 70 du charnon fixe 14 au niveau d'une entrée 74 de la zone de blocage 71 du charnon fixe 14.

La zone de guidage 70 du charnon fixe 14 est délimitée par un bord supérieur 75 et un bord inférieur 76, situés à distance l'un de l'autre et qui délimitent un canal de guidage 77. Le côté supérieur 88 de la zone de blocage 71 du charnon fixe 14 est situé dans le prolongement du côté du bord supérieur 75 de la zone de guidage 70. Le côté inférieur 73 de la zone de blocage 71 du charnon fixe 14 est situé dans le prolongement du côté du bord inférieur 76 de la zone de guidage 70. Le côté supérieur 88 de la zone de blocage 71 du charnon fixe 14 est relié au côté inférieur 73 de la zone de blocage 71 du charnon fixe 14 par un fond 90 de la zone de blocage 71 du charnon fixe 14. C'est à hauteur du fond 90 de la zone de blocage 71 du charnon fixe 14 que le crochet 52 du charnon fixe 14 émane du corps 72 du charnon fixe 14.

Le canal de guidage 77 est ouvert sur l'extérieur du charnon fixe 14 au niveau d'une entrée 78 du canal de guidage 77, et sur la zone de blocage 71 du charnon fixe 14 au niveau de l'entrée 74 de la zone de blocage 71 du charnon fixe 14.

Le canal de guidage 77 a une forme coudée, du fait du bord supérieur 75 de la zone de guidage 70 du charnon fixe 14 et du bord inférieur 76 de la zone de guidage 70 du charnon fixe 14 divisés chacun en deux parties, les deux parties de chacun desdits bords 75, 76 formant entre elles un angle.

Le bord supérieur 75 de la zone de guidage 70 du charnon fixe 14 comprend une partie terminale libre 79 qui est rectiligne. Le bord supérieur 75 de la zone de guidage 70 du charnon fixe 14 comprend une partie proximale 80 à la zone de blocage 71 du charnon fixe 14 qui forme un coude avec la partie terminale libre 79 du bord supérieur 75 de la zone de guidage 77.

La partie proximale 80 à la zone de blocage 71 du charnon fixe 14 est située entre la partie terminale libre 79 du bord supérieur 75 de la zone de guidage 70 du charnon fixe 14 et la zone de blocage 71 du charnon fixe 14.

Le bord inférieur 76 de la zone de guidage 70 du charnon fixe 14 comprend une première partie 81 rectiligne faisant face à la partie terminale libre 79 du bord supérieur 75 de la zone de guidage 70 du charnon fixe 14, et une deuxième partie 82 située entre la première partie 81 du bord inférieur 76 de la zone de guidage 70 du charnon fixe 14 et la zone de blocage 71 du charnon fixe 14 et faisant face à la partie proximale 80 à la zone de blocage 71 du charnon fixe 14. La deuxième partie 82 du bord inférieur 76 de la zone de guidage 70 du charnon fixe 14 forme un coude avec la première partie 81 dudit bord inférieur 76.

Dans le canal de guidage 77, la première partie 81 du bord inférieur 76 de la zone de guidage 70 du charnon fixe 14 et la partie terminale libre 79 du bord supérieur 75 de la zone de guidage 70 du charnon fixe 14 délimitent ensemble une zone d'amorçage 83. La zone d'amorçage 83 du canal de guidage 77 se rétrécie depuis l'entrée 78 du canal de guidage 77 en direction de la zone de blocage 71 du charnon fixe 14.

Dans le canal de guidage 77, la deuxième partie 82 du bord inférieur 76 de la zone de guidage 70 du charnon fixe 14 et la partie proximale 80 à la zone de blocage 71 du charnon fixe 14 délimitent ensemble une zone de couplage 84. Dans la zone de guidage 70 du charnon fixe 14, une distance sensiblement constante sépare la deuxième partie 82 du bord inférieur 76 de la zone de guidage 70 du charnon fixe 14 et la partie proximale 80 à la zone de blocage 71 du charnon fixe 14, cette distance étant également celle de la zone de blocage 71 au niveau de son entrée 74. Par ailleurs, la plus grande dimension de la zone de blocage 71 du charnon fixe 14 formée de l'ouverture oblongue 89 lui est supérieure.

Les FIGURE 4, 5 et 6 illustrent de façon schématique des étapes successives mettant en oeuvre de la charnière active lors d'un choc piéton sensiblement frontal au véhicule automobile 1. Ces étapes successives sont comprises dans un procédé d'ouverture d'une charnière active 13 pour capot 3 de véhicule automobile 1 consécutivement à un choc en front de véhicule automobile 1, et illustrent la coopération entre la béquille 2 de la charnière active 13, le charnon fixe 14 et le charnon mobile 16 de la charnière active 13 conforme au premier aspect de l'invention.

Dans Les FIGURE 4, 5 et 6, seule une partie du charnon mobile 16 est illustrée pour faciliter la lecture des FIGURES 4, 5 et 6.

Dans Les FIGURE 4, 5 et 6, la béquille 2 de la charnière active 13 conforme au premier aspect de l'invention comprend l'organe de retenue 42, une ouverture de guidage 35 qui coopère avec un ergot de guidage 39 du charnon mobile 16 de la charnière active 13, et une ouverture circulaire 36 qui coopère avec l'axe de rotation 17 du charnon mobile 16 de la charnière active 13. L'organe de retenue 42 de la béquille 2 prend la forme d'un rivet qui s'étend perpendiculairement au charnon fixe 14 et configuré pour pouvoir se loger dans la zone de guidage 70 du charnon fixe 14 et être bloquée dans la zone de blocage 71 du charnon fixe 14.

La FIGURE 4 illustre en superposition une étape initiale et une sous-étape d'amorçage inclue dans une étape de guidage. La sous-étape d'amorçage est représentée par des traits pointillés. On passe de l'étape initiale à la sous-étape d'amorçage lorsque la béquille 2 de la charnière active 13 est entrainée en rotation par le charnon mobile 16 comme illustré par une flèche arquée 91. Plus particulièrement, la béquille 2 de la charnière active 13 est entrainée en rotation par l'ergot de guidage 39 du charnon mobile 16 de la charnière active 13 au niveau de l'ouverture de guidage, et par l'axe de rotation 17 du charnon mobile 16 de la charnière active 13 au niveau de l'ouverture circulaire 36 de la béquille 2 de la charnière active 13.

Lors de l'étape initiale, la béquille 2 est en position de repos et l'organe de retenue 42 de la béquille 2 est libre, à distance de l'entrée 78 du canal de guidage 77, dissociée du charnon fixe 14. C'est seulement lorsque la béquille 2 de la charnière active 13 est entrainée en rotation par le charnon mobile 16 de la charnière active 13 que l'organe de retenue 42 de la béquille 2 de la charnière active 13 franchi l'entrée 78 du canal de guidage 77 du charnon fixe 14. L'entrée de l'organe de retenue 42 de la béquille 2 de la charnière active 13 dans la zone de guidage 70 du charnon fixe 14 initie la sous-étape d'amorçage, comprise dans l'étape de guidage.

Lors de la sous-étape d'amorçage, qui a lieu pendant l'ouverture de la charnière active 13, la zone de guidage 70 du charnon fixe 14 collabore avec l'organe de retenue 42 de la béquille 2 de la charnière active 13 afin de l'orienter vers la zone de blocage 71 du charnon fixe 14. Comme la zone d'amorçage 83 du canal de guidage 77 va en se rétrécissant vers la zone de couplage 84 du canal de guidage 77, la zone d'amorçage 83 du canal de guidage 77 assure un guidage en translation de l'organe de retenue 42 de la béquille 2 de la charnière active 13 contre le bord supérieur 75 de la zone de guidage 70 du charnon fixe 14 et/ou le bord inférieur 76 de la zone de guidage 70.

Lors d'une sous-étape de couplage inclue dans l'étape de guidage, le canal de guidage 77 coudé permet que l'organe de retenue 42 de la béquille 2 suive le mouvement de rotation. Le mouvement de rotation est imposé par le charnon mobile 16 de la charnière active 13 entrainant la béquille 2 de la charnière active 13. La sous-étape d'amorçage se termine lorsque l'organe de retenue 42 de la béquille 2 de la charnière active 13 entre dans la zone de couplage 84 du charnon fixe 14. Lorsque l'organe de retenue 42 de la béquille 2 de la charnière active 13 est dans la zone de couplage 84 du charnon fixe 14, c'est la sous-étape de couplage, ici non illustrée. La sous-étape de couplage se termine lorsque l'organe de retenue 42 de la béquille 2 de la charnière active 13 entre dans la zone de blocage 71 du charnon fixe 14.

Les FIGURES 5 et 6 illustrent la collaboration entre la zone de blocage 71 du charnon fixe 14 et l'organe de retenue 42 de la béquille 2 de la charnière active 13 qui permet de maintenir ladite charnière active 13 dans une configuration déployée.

La FIGURE 5 illustre l'initiation de l'étape de blocage, lors de l'entrée de l'organe de retenue 42 de la béquille 2 de la charnière active 13 dans la zone de blocage 71 du charnon fixe 14. En l'espèce, l'organe de retenue 42 de la béquille 2 de la charnière active 13 arrive en butée du côté supérieur 88 de la zone de blocage 71 du charnon fixe 14 et du fond 90 de la zone de blocage 71 du charnon fixe 14.

La FIGURE 6 illustre la fin de l'étape de blocage, lorsque l'organe de retenue 42 de la béquille 2 de la charnière active 13 est bloqué dans la zone de blocage 71 du charnon fixe 14. Par un mouvement descendant d'une partie inférieure 25 de la béquille, imposé par une traction ascendante du charnon mobile 16 sur une partie supérieure 24 de la béquille 2 opposée à la partie inférieure 25, comme illustré par une paire de flèches opposées 93, l'organe de retenue 42 de la béquille 2 de la charnière active 13 vient alors se loger au contact du côté inférieur 73 de la zone de blocage 71 du charnon fixe 14.

En synthèse, le charnon fixe 14 de charnière active 13 pour capot 3 de véhicule automobile 1 est configuré pour guider un organe de retenue 42 d'une béquille 2 de la charnière active 13 et pour maintenir ladite béquille 2 de la charnière active 13 en une position de soutien de capot 3 du véhicule automobile 1 de sorte à maintenir ladite charnière active 13 dans une configuration déployée. Le charnon fixe 14 selon l'invention comprend une zone de guidage 70 destinée à collaborer avec l'organe de retenue 42 afin de l'orienter vers une zone de blocage 71 lors de l'ouverture de la charnière active 13, la zone de blocage 71 du charnon fixe 14 étant destinée à collaborer avec l'organe de retenue 42 de la béquille 2 de la charnière active 13 pour l'immobiliser.

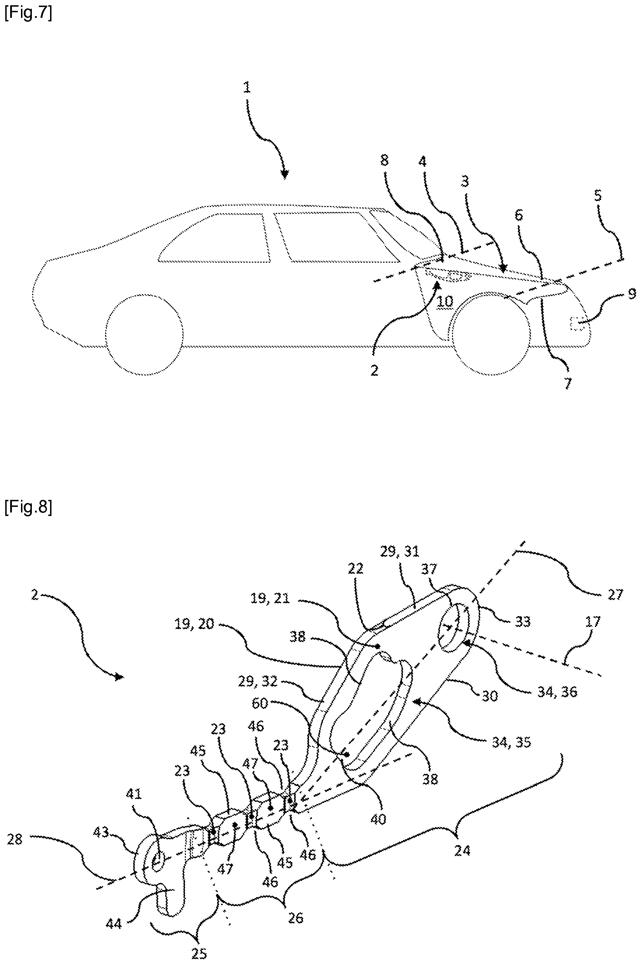

En référence à la FIGURE 7 représente un véhicule automobile 1 équipé de la charnière active conforme au premier aspect de l'invention, avec sa béquille 2. Le véhicule automobile 1 comprend à l'avant un capot 3. Le capot 3 du véhicule automobile 1 est représenté fermé dans la FIGURE 7, dans une position dite basse.

La FIGURE 7 montre que la béquille 2 est située sous le capot 3 du véhicule automobile 1. La béquille 2 est représentée en pointillée, par transparence, dans une position de repos, sensiblement à l'horizontal dans le véhicule automobile 1. L'organe de détection 9 de choc sensiblement frontal du véhicule automobile 1 est schématisé en traits pointillés.

La béquille 2 est recouverte par une aile avant 10 du véhicule automobile 1. Ainsi, la béquille 2 est masquée par l'aile avant 10 et le capot 3 lorsque le capot 3 du véhicule automobile 1 est en position basse.

Comme illustré en FIGURE 2, lorsque le capot 3 du véhicule automobile 1 est en position haute par rapport à une structure 15 du véhicule automobile 1, la béquille 2 est dans une position de soutien du capot 3 du véhicule automobile 1 de sorte à maintenir le capot 3 du véhicule automobile 1 en position haute. Dans la position de soutien du capot 3 du véhicule automobile 1, la béquille 2 est sensiblement à la verticale dans le véhicule automobile 1.

La béquille 2 se situe le long de l'aile avant 10 du véhicule automobile 1, au niveau d'une partie supérieure 11 de l'aile avant 10. La béquille 2 se situe le long d'une portion latérale 12 du capot 3 du véhicule automobile 1. La béquille 2 peut se situer du côté droit et/ou du côté gauche du véhicule automobile 1.

Le capot 3 du véhicule automobile 1 est fixé solidairement à la charnière active 13 de capot 3 de véhicule automobile 1 qui comprend la béquille 2. C'est la charnière active 13 de capot 3 de véhicule automobile 1 qui contrôle l'ouverture du capot 3 du véhicule automobile 1 selon le deuxième axe de mise en rotation 5.

La FIGURE 8 montre de façon isolée la béquille 2. Dans la FIGURE 8, la béquille 2 est intègre, en ce sens qu'elle est représentée non déformée. On comprend ainsi que la béquille 2 représentée dans la FIGURE 8 est telle que trouvée en pièce détachée au préalable à son installation dans une charnière active 13, ou au préalable à son installation dans un véhicule automobile 1 que l'on souhaite équiper de l'invention, ou telle que trouvée dans le véhicule automobile 1 conforme au deuxième aspect de l'invention lorsque celui-ci n'a pas subi de choc sensiblement frontal.

La béquille 2 est une pièce plane, formée par une plaque 19. La plaque 19 comprend une première face 20 opposée à une deuxième face 21. La première face 20 de la plaque 19 et la deuxième face 21 de la plaque 19 sont séparées par une épaisseur 22. L'épaisseur 22 de la plaque 19 est constante, plus ou moins 5%, à l'exception de zones d'amincissement local 23 de matière telles que décrites ci-après.

La béquille 2 comprend une partie supérieure 24, une partie inférieure 25, et une partie intermédiaire 26 qui relie la partie supérieure 24 de la béquille 2 à la partie inférieure 25 de la béquille 2.

La béquille 2 est une pièce monobloc, en ce sens que la partie supérieure 24 de la béquille 2, la partie inférieure 25 de la béquille 2 et la partie intermédiaire 26 de la béquille 2 sont toutes trois obtenues en même temps lors d'un seul et même processus de fabrication. La partie supérieure 24 de la béquille 2, la partie inférieure 25 de la béquille 2 et la partie intermédiaire 26 de la béquille 2 sont indissociables l'unes de l'autre sans que ne soit porté atteinte à leur l'intégrité.

La partie supérieure 24 de la béquille 2 s'étend selon un axe d'extension 27 sécant à un axe d'élongation 28 de la partie intermédiaire 26 de la béquille 2.

La partie supérieure 24 de la béquille 2 comprend un premier bord périphérique 29 et un deuxième bord périphérique 30. Au moins un angle non nul sépare le premier bord périphérique 29 de la partie supérieure 24 de la béquille 2 et le deuxième bord périphérique 30 de la partie supérieure 24 de la béquille 2. En l'espèce, le premier bord périphérique 29 de la partie supérieure 24 de la béquille 2 comprend deux portions 31, 32 qui forment un angle non nul entre elles et qui forment aussi un angle non nul avec le deuxième bord périphérique 30 de la partie supérieure 24 de la béquille 2.

Le premier bord périphérique 29 de la partie supérieure 24 de la béquille 2 et le deuxième bord périphérique 30 de la partie supérieure 24 de la béquille 2 sont reliés entre eux par une extrémité terminale supérieure 33 de la béquille 2. L'axe d'extension 27 de la partie supérieure 24 de la béquille 2 passe par l'extrémité terminale supérieure 33 de la béquille 2 et s'étend jusqu'à la partie intermédiaire 26 de la béquille 2.

La partie supérieure 24 de la béquille 2 comprend un organe de couplage en rotation 34 avec un charnon mobile 16 de la charnière active 13, le charnon mobile 16 de la charnière active 13 étant non représenté sur la FIGURE 8. L'organe de couplage en rotation 34 de la partie supérieure 24 de la béquille 2 comprend deux ouvertures traversant la plaque 19 depuis sa première face 20 jusqu'à sa la deuxième face 21 : une ouverture de guidage 35 et une ouverture circulaire 36, toutes deux alignées sur l'axe d'extension 27 de la partie supérieure 24 de la béquille 2. L'ouverture de guidage 35 de l'organe de couplage en rotation 34 de la partie supérieure 24 de la béquille 2 est située entre la partie intermédiaire 26 de la béquille 2 et l'ouverture circulaire 36 de l'organe de couplage en rotation 34 de la partie supérieure 24 de la béquille 2. L'ouverture circulaire 36 de l'organe de couplage en rotation 34 de la partie supérieure 24 de la béquille 2 est située entre l'ouverture de guidage 35_de l'organe de couplage en rotation 34 de la partie supérieure 24 de la béquille 2 et l'extrémité terminale supérieure 33 de la béquille 2.

L'ouverture circulaire 36 de l'organe de couplage en rotation 34 de la partie supérieure 24 de la béquille 2 est délimitée par un bord circulaire 37. L'extrémité terminale supérieure 33 de la béquille 2 a une forme arrondie qui suit le contour du bord circulaire 37 de l'ouverture circulaire 36 de l'organe de couplage en rotation 34 de la partie supérieure 24 de la béquille 2. L'ouverture circulaire 36 de l'organe de couplage en rotation 34 de la partie supérieure 24 de la béquille 2 est destinée à collaborer avec l'axe de rotation 17 solidaire du charnon mobile 16 de la charnière active 13, le charnon mobile 16 de la charnière active 13 n'étant pas représenté sur la FIGURE 8.

L'ouverture de guidage 35 de l'organe de couplage en rotation 34 de la partie supérieure 24 de la béquille 2 est délimitée par deux bords longitudinaux 38 qui s'étendent en direction de l'ouverture circulaire 36 de l'organe de couplage en rotation 34 de la partie supérieure 24 de la béquille 2. Un angle non nul sépare les deux bords longitudinaux 38 de l'ouverture de guidage 35 de l'organe de couplage en rotation 34 de la partie supérieure 24 de la béquille 2. L'un des bords longitudinaux 38 de l'ouverture de guidage 35 de l'organe de couplage en rotation 34 de la partie supérieure 24 de la béquille 2 s'étend de façon sensiblement parallèle au premier bord périphérique 29 de la partie supérieure 24 de la béquille 2, et l'autre des bords longitudinaux 38 de l'ouverture de guidage 35 de l'organe de couplage en rotation 34 de la partie supérieure 24 de la béquille 2 s'étend de façon sensiblement parallèle au deuxième bord périphérique 30 de la partie supérieure 24 de la béquille 2.

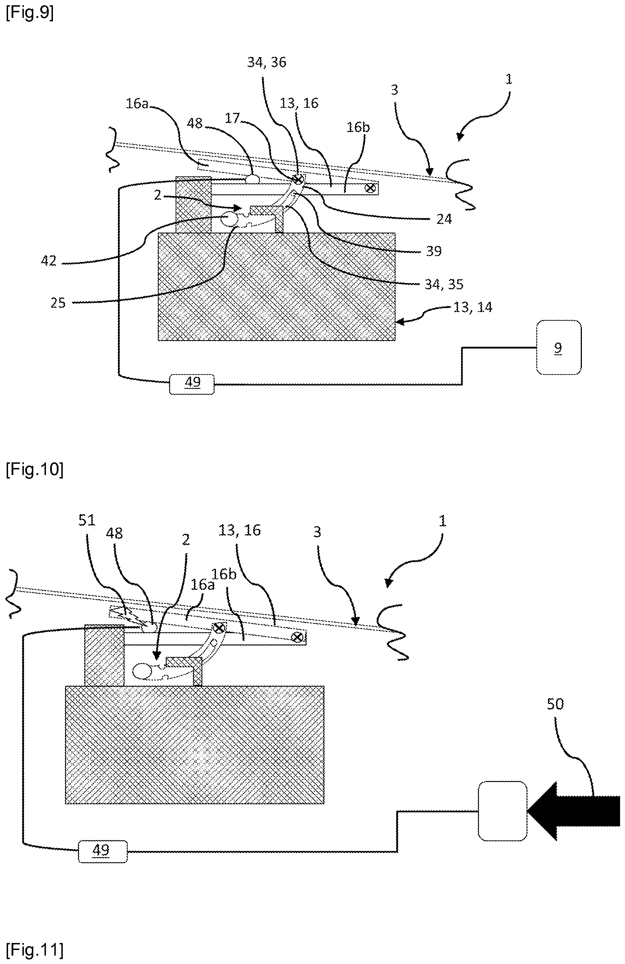

L'ouverture de guidage 35 de l'organe de couplage en rotation 34 de la partie supérieure 24 de la béquille 2 est destinée à collaborer avec un ergot de guidage 39 du charnon mobile 16 de la charnière active 13 illustré en FIGURE 9.

L'ouverture de guidage 35 de l'organe de couplage en rotation 34 de la partie supérieure 24 de la béquille 2 comprend, au niveau d'un bord inférieur 40 situé du côté de la partie intermédiaire 26 de la béquille 2, une zone de blocage 60 de l'ergot de guidage 39 du charnon mobile 16 de la charnière active 13 avec laquelle la béquille 2 est destinée à collaborer.

La partie inférieure 25 de la béquille 2 comprend un orifice 41 qui est circulaire et qui est destiné à loger un organe de retenue 42 avec le charnon fixe 14 de la charnière active 13 avec laquelle la béquille 2 est destinée à collaborer. L'organe de retenue 42 de la partie inférieure 25 de la béquille 2 est représenté en FIGURE 9. Une extrémité terminale inférieure 43 de la béquille 2, opposée à l'extrémité terminale supérieure 33 de la béquille 2, borde l'orifice 41 de la partie inférieure 25 de la béquille 2. L'extrémité terminale inférieure 43 de la béquille 2 est de forme arrondie.

La partie inférieure 25 de la béquille 2 s'étend selon l'axe d'élongation 28 de la partie intermédiaire 26 de la béquille 2.

La partie inférieure 25 de la béquille 2 comprend une dérive 44. La dérive 44 la partie inférieure 25 de la béquille 2 de s'étend perpendiculairement à la partie inférieure 25 de la béquille 2. Plus particulièrement, la dérive 44 la partie inférieure 25 de la béquille 2 s'étend perpendiculairement à l'axe d'élongation 28 de la partie intermédiaire 26 de la béquille 2. La dérive 44 la partie inférieure 25 de la béquille 2 s'étend en sens opposé à la partie supérieure 24 de la béquille 2.

La partie intermédiaire 26 de la béquille 2 comprend des bords latéraux 45 dont le profil est symétrique par rapport à l'axe d'élongation 28 de la partie intermédiaire 26 de la béquille 2. L'un et l'autre des bords latéraux 45 de la partie intermédiaire 26 de la béquille 2 sont respectivement dans le prolongement du premier bord périphérique 29 de la partie supérieure 24 de la béquille 2 et du deuxième bord périphérique 30 de la partie supérieure 24 de la béquille 2.

Une distance mesurée perpendiculairement à l'axe d'élongation 28 de la partie intermédiaire 26 de la béquille 2 entre les bords latéraux 45 de la partie intermédiaire 26 de la béquille 2 est plus courte qu'une distance séparant le premier bord périphérique 29 de la partie supérieure 24 de la béquille 2 et du deuxième bord périphérique 30 de la partie supérieure 24 de la béquille 2 et mesurée perpendiculairement à l'axe d'extension 27 de la partie supérieure 24 de la béquille 2. Autrement dit, la partie intermédiaire 26 de la béquille 2 est plus étroite que la partie supérieure 24 de la béquille 2.

La partie intermédiaire 26 de la béquille 2 comprend au moins une zone d'amincissement local 23 de matière. Une zone d'amincissement local 23 de la partie intermédiaire 26 de la béquille 2 est délimitée de part et d'autre par un profil circulaire de sorte à former deux échancrures 46 dans les bords latéraux 45 de la partie intermédiaire 26 de la béquille 2.

En l'espèce, la partie intermédiaire 26 de la béquille 2 comprend trois zones d'amincissement local 23, les zones d'amincissement local 23 de la partie intermédiaire 26 de la béquille 2 étant directement adjacentes deux à deux. Deux zones d'amincissement local 23 de la partie intermédiaire 26 de la béquille 2 directement adjacentes sont séparées par une zone de plus grande largeur 47 de la partie intermédiaire 26 de la béquille 2. En l'espèce, la partie intermédiaire 26 de la béquille 2 comprend deux zones de plus grande largeur 47 identiques. L'une des zones d'amincissement local 23 de la partie intermédiaire 26 de la béquille 2 relie une des zones de plus grande largeur 47 de la partie intermédiaire 26 de la béquille 2 à la partie inférieure 25 de la béquille 2, et l'autre des zones d'amincissement local 23 de la partie intermédiaire 26 de la béquille 2 relie l'autre des zones de plus grande largeur 47 de la partie intermédiaire 26 de la béquille 2 à la partie supérieure 24 de la béquille 2.

La zone d'amincissement local 23 de la partie intermédiaire 26 de la béquille 2 est aussi une zone où l'épaisseur mesurée entre la première face 20 de la plaque 19 et la deuxième face 21 de la plaque 19 est plus petite par rapport à l'épaisseur 22 mesurée au niveau de la partie supérieure 24 de la béquille 2 et au niveau de la partie inférieure 25 de la béquille 2 et au niveau de la zone de plus grande largeur 47 de la partie intermédiaire 26 de la béquille 2.

Les FIGURES 9 à 14 illustrent de façon schématique des étapes successives mettant en oeuvre la béquille 2 lors d'un choc piéton sensiblement frontal au véhicule automobile 1. Ces étapes successives sont comprises dans un procédé d'amortissement d'un effort d'accident et illustrent la coopération entre la béquille 2, le charnon fixe 14 de la charnière active 13 conforme au premier aspect de l'invention et le charnon mobile 16 de la charnière active 13.

La FIGURE 9 montre une situation préalable au choc sensiblement frontal. La FIGURE 9 illustre la charnière active 13 lorsqu'elle est fermée, c'est à dire repliée sur elle-même. La béquille 2 est en position de repos. Le capot 3 du véhicule automobile 1 est en position basse.

La béquille 2 coopère avec le charnon mobile 16 de la charnière active 13. L'ouverture circulaire 36 de l'organe de couplage en rotation 34 de la partie supérieure 24 de la béquille 2 est associée à l'axe de rotation 17 du charnon mobile 16 de la charnière active 13. L'ergot de guidage 39 du charnon mobile 16 de la charnière active 13 est engagé dans l'ouverture de guidage 35 de l'organe de couplage en rotation 34 de la partie supérieure 24 de la béquille 2.

La béquille 2 est dissociée du charnon fixe 14 de la charnière active 13. L'organe de retenue 42 de la partie inférieure 25 de la béquille 2, qui s'étend perpendiculairement à la plaque de la béquille 2, est libre.

Le charnon mobile 16 de la charnière active 13 est fixée par un rivet de blocage 48. Le rivet de blocage 48 bloque la rotation du charnon mobile 16 de la charnière active 13 selon l'axe de rotation 17, de sorte à ce que ledit charnon mobile 16 soit maintenu fermé. En l'espèce, le rivet de blocage 48 est un point de soudure entre deux éléments mobiles du charnon mobile 16 de la charnière active 13, plus particulièrement entre un élément de liaison terminal 16a et un élément de liaison intermédiaire 16b du charnon mobile 16. L'élément de liaison terminal 16a est fixé au capot 3, et l'élément intermédiaire 16b relie l'élément de liaison terminal 16a au charnon fixe 14. L'élément de liaison terminal 16a et l'élément de liaison intermédiaire 16b sont articulés entre eux au niveau de la ligne de rotation 18, qui forme par exemple un axe de rotation.

L'organe de détection 9 de choc sensiblement frontal du véhicule automobile 1 est raccordé électriquement à un actionneur 49. L'actionneur 49 est configuré pour piloter une ouverture de la charnière active 13 en libérant le charnon mobile 16 de la charnière active 13 du rivet de blocage 48.

La FIGURE 10 montre une situation de choc sensiblement frontal. La FIGURE 10 illustre la charnière active 13 lorsqu'elle est fermée, c'est à dire lorsque le charnon mobile 16 de la charnière active 13 est replié sur lui-même. La béquille 2 est en position de repos. Le capot 3 du véhicule automobile 1 est en position basse.

L'organe de détection 9 du véhicule automobile 1 détecte le choc sensiblement frontal, représenté par une flèche pleine 50. L'organe de détection 9 du véhicule automobile 1 active l'actionneur 49, qui initie la rupture du rivet de blocage 48 comme représenté par un éclair 51. C'est l'étape d'actionnement.

La FIGURE 11 montre une situation immédiatement consécutive au choc sensiblement frontal correspondant à une étape d'ouverture de la charnière active 13. La FIGURE 11 illustre la charnière active 13 lorsqu'elle est en train de s'ouvrir comme représenté par la double flèche 51, c'est à dire lorsque le charnon mobile 16 de la charnière active 13 se déploie. Par effet levier, la béquille 2 se soulève. Le capot 3 du véhicule automobile 1 est poussé de la position basse à la position haute.

Le rivet de blocage 48 rompu lors de l'étape d'actionnement permet l'ouverture de la charnière active 13 lors d'étape d'ouverture de la charnière active 13. L'étape d'ouverture de la charnière active 13 comprend une étape d'engagement, une étape de rotation du charnon mobile 16 de la charnière active 13, et une étape de guidage.

Lors de l'étape de rotation du charnon mobile 16 de la charnière active 13, le charnon mobile 16 de la charnière active 13 se déploie par un mouvement de rotation autour de la ligne de rotation 18. Le charnon mobile 16 de la charnière active 13, fixé solidairement au capot 3 du véhicule automobile 1, le soulève comme montré par un arc fléché 54. La charnière active 13 entraine en rotation la béquille 2 selon l'axe de rotation 17 du charnon mobile 16 de la charnière active 13, de sorte à positionner la béquille 2 en position de soutien du capot 3 du véhicule automobile 1.

Lors de l'étape d'engagement, la béquille 2 en rotation autour de l'axe de rotation 17 du charnon mobile 16 de la charnière active 13 s'engage avec le charnon fixe 14 de la charnière active 13. En l'espèce, un crochet 52 du charnon fixe 14 de la charnière active 13 guide s'engage avec l'organe de retenue 42 de la partie inférieure 25 de la béquille 2. La coopération entre la béquille 2 et la charnière active 13 qui a lieu niveau de la partie inférieure 25 de la béquille 2, avec l'organe de retenue 42 de la partie inférieure 25 de la béquille 2 et le crochet 52, permet de bloquer la béquille 2 en position de soutien du capot 3 du véhicule automobile 1 lorsque l'organe de retenue 42 de la partie inférieure 25 de la béquille 2 arrive en buttée d'un fond 53 du crochet 52.

Lors de l'étape de guidage, l'ergot de guidage 39 du charnon mobile 16 de la charnière active 13 est guidé dans l'ouverture de guidage 35 de l'organe de couplage en rotation 34 de la partie supérieure 24 de la béquille 2. La rotation de la béquille 2 autour de l'axe de rotation 17 du charnon mobile 16 de la charnière active 13 est accompagnée par l'ergot de guidage 39 du charnon mobile 16 de la charnière active 13 qui est maintenu entre les bords longitudinaux 38 de l'ouverture de guidage 35 de l'organe de couplage en rotation 34 de la partie supérieure 24 de la béquille 2, jusqu'à ce que ledit ergot de guidage 39 se loge au niveau de la zone de blocage 60 de l'ouverture de guidage 35 de l'organe de couplage en rotation 34 de la partie supérieure 24 de la béquille 2.

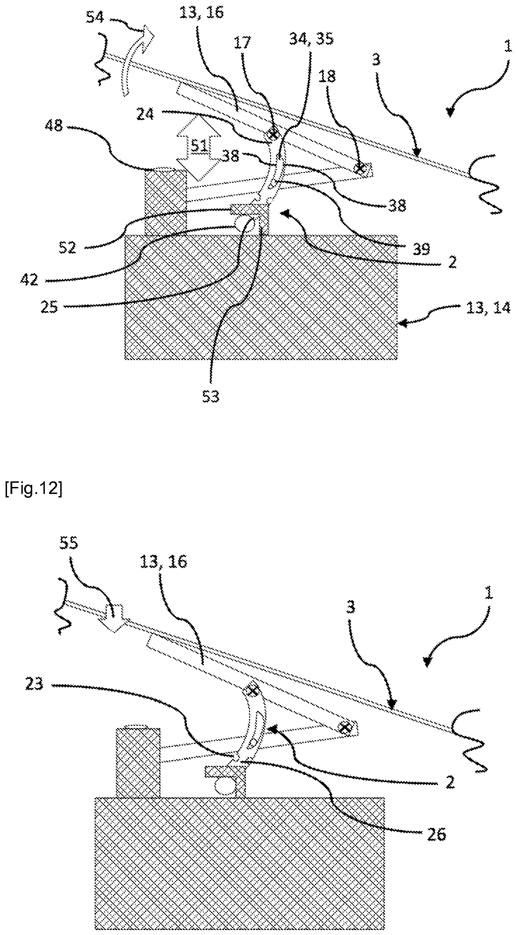

La FIGURE 12, la FIGURE 13 et la FIGURE 14 montrent que la partie intermédiaire 26 de la béquille 2 est configurée pour, d'une part, être rigide et indéformable au regard d'un effort nominal correspondant au moins à la masse du capot 3 du véhicule automobile 1 avec lequel la béquille 2 collabore et, d'autre part, pour être déformable - élastiquement ou plastiquement - au regard de l'effort d'accident.

La FIGURE 12 montre une situation intermédiaire, consécutive au choc sensiblement frontal et précédent un choc sur le capot 3 du véhicule automobile 1. En effet, suite à un choc piéton sensiblement frontal, le piéton est généralement projeté, avant de retomber sur le véhicule automobile 1 qu'il a percuté et de subir un choc au niveau du capot 3 du véhicule automobile 1, générant l'effort d'accident. La FIGURE 12 correspond à une étape de maintien en position ouverte de la charnière active 13. La FIGURE 12 illustre la charnière active 13 lorsqu'elle est ouverte, en position déployée. La béquille 2 est en position de soutien du capot 3 du véhicule automobile 1. Le capot 3 du véhicule automobile 1 est en position haute et maintenu en position haute par la béquille 2. La masse du capot 3 du véhicule automobile 1 génère un effort nominal 55 sur la charnière active 13, et notamment sur la béquille 2. La béquille 2 permet de soutenir la masse du capot 3 du véhicule automobile 1 puisque les zones d'amincissement local 23 de la partie intermédiaire 26 de la béquille 2 sont rigides et indéformables au regard de l'effort nominal 55.

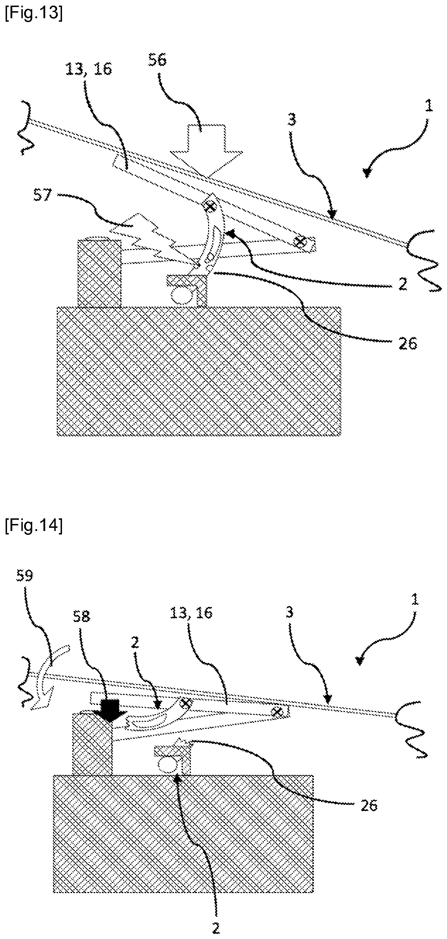

La FIGURE 13 correspond à une étape de survenue d'un effort d'accident 56. La FIGURE 13 montre une situation de choc sur le capot 3 du véhicule automobile 1 générant l'effort d'accident 56. La FIGURE 13 illustre la charnière active 13 lorsqu'elle est ouverte, en position déployée. La béquille 2 est en position de soutien du capot 3 du véhicule automobile 1 mais à un point de rupture du fait de l'effort d'accident 56, puisqu'elle est déformable au regard de l'effort d'accident 56 comme représenté par un autre éclair 57. Le capot 3 du véhicule automobile 1 est en position haute.

La FIGURE 14 montre une situation consécutive au choc sur le capot 3 du véhicule automobile 1 ayant généré l'effort d'accident 56. Il s'agit d'une étape de fermeture de la charnière active 13. La FIGURE 14 illustre la charnière active 13 lorsque le charnon mobile 16 de la charnière active 13 se referme, comme illustré par une flèche pleine descendante 58, en une position affaissée. La béquille 2 est dans une position de relaxe. La béquille 2 est rompue et sa fonction de soutien du capot 3 du véhicule automobile 1 lui fait alors défaut, de sorte à ce que ledit capot 3 du véhicule automobile 1 s'affaisse dans une position intermédiaire comme montré par une flèche arquée 59. Le capot 3 du véhicule automobile 1 accompagne ainsi le choc au niveau du capot 3 du véhicule automobile 1.

En synthèse, l'invention concerne une béquille 2 pour charnière active 13 de capot 3 de véhicule automobile 1. La béquille 2 est configurée pour coopérer avec une charnière active 13 qui rend mobile en rotation ladite béquille 2 par un effet levier. La béquille 2 comprend une partie supérieure 24 fixée solidairement à une partie inférieure 25 par l'intermédiaire d'une partie intermédiaire 26. La partie supérieure 24 de la béquille 2 comprend un organe de couplage en rotation 34 configuré pour entrer en rotation avec un charnon mobile 16 de la charnière active 13. La partie inférieure 25 de la béquille 2 comprend un organe de retenue 42 configuré pour retenir la béquille 2 lorsqu'elle coopère avec un charnon fixe 14 de la charnière active 13. La partie intermédiaire 26 de la béquille 2 est configurée pour être de faible résistance lorsque soumise à un effort d'accident 56, supérieur à un effort nominal 55 et prédéterminé, de sorte à perdre son intégrité sous l'effort d'accident 56. Ainsi, si la partie intermédiaire 26 de la béquille 2 reste rigide et indéformable en deçà de l'effort d'accident 56, et notamment lorsqu'elle doit supporter une masse du capot 3 du véhicule automobile 1 correspondant à l'effort nominal 55, est déformable lorsque soumise à l'effort d'accident 56.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Charnière active (13) pour capot (3) de véhicule automobile (1) comportant :
- un charnon fixe (14) destiné à être fixé solidairement à une structure (15) du véhicule automobile (1) et par rapport à laquelle le capot (3) est destiné à être soulevé,
- un charnon mobile (16) destiné à être fixé solidairement au capot (3) afin de pouvoir en contrôler son ouverture,
- et une béquille (2) couplée en rotation avec ledit charnon mobile (16) par un organe de couplage en rotation (34), la béquille (2) comprenant en outre un organe de retenu (42),
le charnon fixe (14) comprenant :
- une zone de blocage (71) destinée à collaborer avec l'organe de retenue (42) de la béquille (2) afin de maintenir ladite charnière active (13) dans une configuration déployée ; et
- une zone de guidage (70) destinée à collaborer avec l'organe de retenue (42) afin de l'orienter vers la zone de blocage (71) lors de l'ouverture de la charnière active (13), la zone de guidage (70) étant délimitée par un bord inférieur (76) et un bord supérieur (75) libre situé à distance du bord inférieur (76), le bord inférieur (76) et le bord supérieur (75) formant ensemble un canal de guidage (77) de l'organe de retenue (42) vers la zone de blocage (71),
**caractérisé en ce que** le bord supérieur (75) de la zone de guidage (70) comprend :
- une partie terminale libre (79) rectiligne ;
- une partie proximale (80) à la zone de blocage (71) et formant un coude par rapport à la partie terminale libre (79) dudit bord supérieur (75),
**le canal de guidage (77) étant ouvert sur l'extérieur du charnon fixe (14) au niveau d'une entrée (78) du canal de guidage (77) délimitée au moins par la paroi terminale libre (79).**

2. Charnière active (13) selon la revendication précédente, dans laquelle le bord inférieur (76) de la zone de guidage (70) comprend :
- une première partie (81) rectiligne ;
- une deuxième partie (82) située dans une configuration intermédiaire entre la première partie (81) et la zone de blocage (71), la deuxième partie (82) formant un coude par rapport à la première partie (81) dudit bord inférieur (76).

3. Charnière active (13) selon la revendication précédente, dans laquelle le canal de guidage (77) comprend une zone d'amorçage (83) délimitée par la partie terminale libre (79) du bord supérieur (75) et par la première partie (81) du bord inférieur (76), la partie terminale libre (79) du bord supérieur (75) et la première partie (81) du bord inférieur (76) formant ensemble un angle non nul.

4. Charnière active (13) selon la revendication précédente, dans laquelle le canal de guidage (77) comprend une zone de couplage (84) délimitée par la partie du bord supérieur (75) proximale à la zone de blocage (71) et par la deuxième partie (82) du bord inférieur (76), une largeur de la zone de couplage (84) étant sensiblement constante en direction de la zone de blocage (71),

5. Charnière active (13) selon l'une quelconque des revendications précédentes, dans laquelle la zone de blocage (71) prend la forme d'une ouverture oblongue (89).

6. Charnière active (13) selon la revendication précédente, dans laquelle l'ouverture oblongue (89) formant la zone de blocage (71) est délimitée par un côté inférieur (73) qui est situé dans une direction opposée au bord supérieur (75) de la zone de guidage (70) par rapport à une extrémité de la deuxième partie (82) du bord inférieur (76) de la zone de guidage, prise du côté de ladite ouverture oblongue (89).

7. Charnière active (13) selon l'une des revendications précédentes, dont la béquille (2) comprend :
- une partie supérieure (24) comprenant l'organe de couplage en rotation (34) avec le charnon mobile (16) ;
- une partie inférieure (25) comprenant l'organe de retenue (42) avec le charnon fixe (14) ;
- une partie intermédiaire (26) située entre la partie supérieure (24) et la partie inférieure (25), la partie intermédiaire (26) étant configurée pour, d'une part, être rigide et indéformable au regard d'un effort nominal (55) correspondant au moins à une masse du capot (3) avec lequel la béquille (2) est destinée à collaborer et, d'autre part, pour être déformable au regard d'un effort - dit d'accident (56) - prédéfini et supérieur à l'effort nominal (55).

8. Charnière active (13) selon la revendication précédente, dans laquelle la partie supérieure (24) comprend une ouverture de guidage (35) et le charnon mobile (16) de la charnière active (13) comprend un ergot de guidage (39) s'engageant dans l'ouverture de guidage (35).

9. Charnière active (13) selon l'une quelconque des revendications 7 à 8, dans laquelle la partie intermédiaire (26) de la béquille (2) comprend au moins une zone d'amincissement local (23) de matière.

10. Charnière active (13) selon l'une quelconque des revendications 7 à 9, dans laquelle l'ouverture de guidage (35) est délimitée par deux bords longitudinaux (38) qui s'étendent en direction de l'organe de couplage en rotation (34), un angle non nul séparant les deux bords longitudinaux (38).

11. Charnière active (13) selon la revendication précédente, dans laquelle l'ouverture de guidage (35) comprend, au niveau d'un bord inférieur (40) situé du côté de la zone intermédiaire de la béquille (2), une zone de blocage (60) de l'ergot de guidage (39) du charnon mobile (16) de la charnière active (13).

12. Charnière active (13) selon la revendication 11, dont l'organe de retenue (42) de la partie inférieure (25) de la béquille (2) est découplé du charnon fixe (14) lorsque la charnière active (13) est fermée et ledit organe de retenue (42) collabore avec le charnon fixe (14) lorsque la charnière active (13) est ouverte,
- la charnière comprenant un actionneur (49) configuré pour piloter une ouverture et/ou une fermeture de la charnière active (13)

13. Véhicule automobile (1) comprenant une structure (15) et un capot (3) monté mobile en rotation par rapport à la structure (15) par l'intermédiaire d'une charnière active (13) selon la revendication précédente.

## Patentansprüche

1. Aktives Scharnier (13) für eine Motorhaube (3) eines Kraftfahrzeugs (1) mit
- ein feststehendes Scharnier (14) zur integralen Befestigung an einer Struktur (15) des Kraftfahrzeugs (1), in Bezug auf die die Haube (3) angehoben werden soll,
- ein bewegliches Scharnier (16), das an der Haube (3) fest befestigt werden kann, um deren Öffnung kontrollieren zu können;
- und einem Ständer (2), der mit dem beweglichen Ständer (16) über ein Drehkoppelglied (34) drehbar gekoppelt ist, wobei der Ständer (2) ferner ein Halteglied (42) aufweist,
feststehende Ladeeinrichtung (14), bestehend aus:
- einem Sperrbereich (71) zur Zusammenarbeit mit dem Halteelement (42) der Ständer (2) zum Halten des aktiven Scharniers (13) in einer ausgefahrenen Konfiguration; und
- einen Führungsbereich (70) zur Zusammenarbeit mit dem Halteelement (42) zur Ausrichtung auf den Sperrbereich (71) beim Öffnen des Wirkscharniers (13), wobei der Führungsbereich (70) von einem unteren Rand (76) und einem freien oberen Rand (75) begrenzt ist, der von dem unteren Rand (76) beabstandet ist, (76) und der obere Rand (75) bilden zusammen einen Führungskanal (77) des Haltegliedes (42) zum Sperrbereich (71),
**Dadurch gekennzeichnet, dass** der obere Rand (75) des Führungsbereichs (70) umfasst:
- einen geradlinigen freien Endbereich (79);
- einem proximalen Teil (80) am Sperrbereich (71), der einen Winkel zum freien Endbereich (79) des oberen Randes (75) bildet,
Der Führungskanal (77) ist an einem zumindest von der freien Endwand (79) begrenzten Einlass (78) des Führungskanals (77) auf der Außenseite des feststehenden Scharnierers (14) offen.

2. Aktives Scharnier (13) nach dem vorhergehenden Anspruch, wobei der untere Rand (76) des Führungsbereichs (70) umfasst:
- einem ersten geradlinigen Teil (81);
- ein zweites Teil (82), das in einer Zwischenkonfiguration zwischen dem ersten Teil (81) und dem Sperrbereich (71) angeordnet ist, wobei das zweite Teil (82) eine Krümmung gegenüber dem ersten Teil (81) des unteren Randes (76) bildet.

3. Aktives Scharnier (13) nach dem vorhergehenden Anspruch, bei dem der Führungskanal (77) einen Zündbereich (83) aufweist, der durch den freien Endabschnitt (79) der oberen Kante (75) und durch den ersten Abschnitt (81) der unteren Kante (76), den freien Endabschnitt (79) der oberen Kante (75) und den ersten Abschnitt (8) begrenzt ist 1) der Unterkante (76), die zusammen einen Winkel von nicht null bildet.

4. Aktives Scharnier (13) nach dem vorhergehenden Anspruch, bei dem der Führungskanal (77) einen Kopplungsbereich (84) aufweist, der durch den Abschnitt des oberen Randes (75) proximal zu dem Verriegelungsbereich (71) und durch den zweiten Abschnitt (82) des unteren Randes (76) begrenzt ist, wobei eine Breite des Kopplungsbereichs (84) im Wesentlichen in Richtung zu dem Verriegelungsbereich konstant ist Verriegelung (71),

5. Aktives Scharnier (13) nach einem der vorhergehenden Ansprüche, wobei der Sperrbereich (71) die Form einer länglichen Öffnung (89) hat.

6. Aktives Scharnier (13) nach dem vorhergehenden Anspruch, wobei die längliche Öffnung (89), die den Verriegelungsbereich (71) bildet, durch eine untere Seite (73) begrenzt ist, die in einer Richtung entgegengesetzt zu der oberen Kante (75) des Führungsbereichs (70) relativ zu einem Ende des zweiten Abschnitts (82) des unteren Randes (76) des Bereichs angeordnet ist Führung, die an der Seite der länglichen Öffnung (89) angreift.

7. Aktives Scharnier (13) nach einem der vorhergehenden Ansprüche, dessen Ständer (2) umfasst:
- ein Oberteil (24) mit dem Drehkupplungsglied (34) mit dem beweglichen Scharnier (16);
- einem unteren Teil (25), der das Halteglied (42) mit der feststehenden Scharniere (14) umfasst;
- ein zwischen dem Oberteil (24) und dem Unterteil (25) angeordnetes Zwischenteil (26), wobei das Zwischenteil (26) so ausgebildet ist, dass es gegenüber einer Nennkraft (55), die mindestens einer Masse der Kappe (3) entspricht, mit der der Ständer (2) zusammenwirkt, starr und formbar ist. um in Bezug auf eine Belastung verformbar zu sein - Unfallmeldung (56) - vordefiniert und größer als die Nennkraft (55).

8. Aktives Scharnier (13) nach dem vorhergehenden Anspruch, wobei der obere Abschnitt (24) eine Führungsöffnung (35) aufweist und der bewegliche Scharnier (16) des aktiven Scharniers (13) einen Führungszapfen (39) aufweist, der in die Führungsöffnung (35) eingreift.

9. Aktives Scharnier (13) nach einem der Ansprüche 7 bis 8, bei dem der Zwischenabschnitt (26) des Ständers (2) mindestens einen lokalen Materialverjüngungsbereich (23) aufweist.

10. Aktives Scharnier (13) nach einem der Ansprüche 7 bis 9, bei dem die Führungsöffnung (35) durch zwei Längskanten (38) begrenzt ist, die sich in Richtung des Drehkupplungsgliedes (34) erstrecken, wobei ein nicht-nuller Winkel die beiden Längskanten (38) trennt.

11. Aktives Scharnier (13) nach dem vorhergehenden Anspruch, wobei die Führungsöffnung (35) an einer unteren Kante (40), die auf der Seite des Zwischenbereichs des Ständers (2) angeordnet ist, einen Verriegelungsbereich (60) des Führungszapfens (39) des beweglichen Scharniers (16) des aktiven Scharniers (13) umfasst.

12. Aktives Scharnier (13) nach Anspruch 11, wobei das Halteelement (42) des unteren Teils (25) des Ständers (2) von dem festen Scharnier (14) entkoppelt ist, wenn das aktive Scharnier (13) geschlossen ist, und das Halteelement (42) mit dem festen Scharnier (14) zusammenwirkt, wenn das aktive Scharnier (13) offen ist;
- das Scharnier einen Aktuator (49) aufweist, der zum Ansteuern einer Öffnung und/oder eines Schließens des aktiven Scharniers (13) ausgebildet ist.

13. Kraftfahrzeug (1) mit einer Struktur (15) und einer Abdeckung (3), die relativ zu der Struktur (15) über ein aktives Scharnier (13) nach dem vorhergehenden Anspruch drehbar gelagert ist.

## Claims

1. Active hinge (13) for hood (3) of motor vehicle (1) comprising:
- a fixed hinge (14) intended to be securely attached to a structure (15) of the motor vehicle (1) and in relation to which the hood (3) is intended to be lifted,
- a mobile flap (16) intended to be securely attached to the cover (3) in order to be able to control its opening,
- and a crutch (2) coupled in rotation with the said mobile flap (16) by a rotating coupling organ (34), the crutch (2) also including a holding organ (42),
the fixed hitch (14) comprising:
- a blocking area (71) intended to cooperate with the holding body (42) of the crutch (2) to keep the hinge active (13) in a deployed configuration; and
- a guidance area (70) intended to cooperate with the restraint (42) in order to orient it towards the blocking area (71) when opening the active hinge (13), the guidance area (70) being delimited by a lower edge (76) and a free upper edge (75) located at a distance from the lower edge (76), lower (76) and the upper edge (75) forming together a guide channel (77) from the holding gear (42) to the blocking area (71),
characterized as the top edge (75) of the guidance area (70)
includes:
- a straight terminal part (79);
- a proximal part (80) at the blocking zone (71) and showing an elbow to the free terminal part (79) of the above edge (75),
the guide channel (77) being open to the outside of the fixed hull (14) at an entrance (78) of the guide channel (77) bounded at least by the free terminal wall (79).

2. Active hinge (13) according to the previous claim, in which the lower edge (76) of the guidance area (70) includes:
- a straight first part (81);
- a second part (82) located in an intermediate configuration between the first part (81) and the blocking zone (71), the second part (82) forming an elbow from the first part (81) of the said lower edge (76).

3. Active hinge (13) according to the previous claim, in which the guidance channel (77) includes a bootstrap area (83) delimited by the free terminal portion (79) of the upper edge (75) and the first part (81) of the lower edge (76), the free terminal portion (79) of the upper edge (75) and the first part (81) of the lower edge (76) forming a non-zero angle together.

4. Active hinge (13) according to the previous claim, in which the guidance channel (77) includes a coupling zone (84) delimited by the portion of the upper edge (75) proximal to the blocking zone (71) and by the second part (82) of the lower edge (76), with a width of the coupling zone (84) being substantially constant towards the area block (71).

5. Active hinge (13) according to any of the previous claims, in which the blocking area (71) takes the form of an oblong opening (89).

6. Active hinge (13) according to the previous claim, in which the oblong opening (89) forming the blocking area (71) is delimited by a lower side (73) which is located in a direction opposite the upper edge (75) of the guidance area (70) in relation to one end of the second part (82) of the lower edge (76) of the guidance area guide, taken on the side of the said oblong opening (89).

7. Active hinge (13) according to one of the previous claims, whose crutch (2) includes:
- an upper part (24) comprising the rotating coupling organ (34) with the mobile flap (16);
- a lower part (25) including the holding gear (42) with the fixed hinge (14);
- an intermediate part (26) located between the upper part (24) and the lower part (25), the intermediate part (26) being configured to be rigid and informable in relation to a nominal effort (55) corresponding to at least one mass of the hood (3) with which the crutch (2) is intended to collaborate and, on the other hand, to be deformable in relation to an effort - known as an accident (56) - predefined and greater than the nominal effort (55).

8. Active hinge (13) according to the previous claim, in which the upper part (24) includes a guide opening (35) and the mobile hinge (16) of the active hinge (13) includes a guide slope (39) engaged in the guide opening (35).

9. Active hinge (13) according to any of claims 7 to 8, in which the intermediate part (26) of the crutch (2) includes at least one local thinning zone (23) of matter.

10. Active hinge (13) according to any of the claims 7 to 9, in which the guide opening (35) is delimited by two longitudinal edges (38) which extend towards the rotating coupling organ (34), a non-zero angle separating the two longitudinal edges (38).

11. Active hinge (13) according to the previous claim, in which the guide opening (35) includes, at a lower edge (40) located on the side of the intermediate zone of the crutch (2), a blocking zone (60) of the guide snail (39) of the mobile hinge (16) of the active hinge (13).

12. Active hinge (13) according to claim 11, the holding organ (42) of the bottom (25) of the crutch (2) is decoupled from the fixed hinge (14) when the active hinge (13) is closed and the holding organ (42) collaborates with the fixed hinge (14) when the active hinge (13) is open,
- the hinge containing a actuator (49) configured to control an opening and/or closure of the active hinge (13).

13. Motor vehicle (1) consisting of a structure (15) and a hood (3) movable mounted in rotation with respect to the structure (15) through an active hinge (13) according to the previous claim.
